# EUROPEAN PATENT APPLICATION

(11) **EP 4 491 582 A1**
(43) Date of publication of application: **15.01.2025**
(21) Application number: 24183418.3
(22) Date of filing: 20.06.2024
(51) Int. Cl.: C01G 53/00, H01M 4/505, H01M 4/525

(54) **MANUFACTURING METHOD FOR POSITIVE ELECTRODE ACTIVE MATERIAL, POSITIVE ELECTRODE ACTIVE MATERIAL, AND BATTERY**

(30) Priority: 11.07.2023 JP 2023113928
(71) Applicant: TOYOTA JIDOSHA KABUSHIKI KAISHA, Aichi-ken, 471-8571 (JP)
(72) Inventor: YUBUCHI, So, Toyota-shi, 471-8571 (JP); YOSHIDA, Jun, Toyota-shi, 471-8571 (JP); MORIMOTO, Masahiro, Toyota-shi, 471-8571 (JP)
(74) Representative: D Young & Co LLP

(57) **Abstract**

Disclosed is a manufacturing method for a positive electrode active material having an O2-type structure and having low resistance when applied to a solid battery. The manufacturing method of the present disclosure is a manufacturing method for a positive electrode active material used in solid batteries, comprising obtaining Na-containing oxide particles having a P2-type structure, and subjecting at least a portion of Na in the Na-containing oxide particles to ion exchange with Li to obtain Li-containing oxide particles having an O2-type structure, wherein the Na-containing oxide particles are spherical particles having an average particle diameter of 1.0 µm or more and less than 3.5 µm, and the Li-containing oxide particles are spherical particles having a hollow single-layer structure.

## Description

### TECHNICAL FIELD

The present application discloses a manufacturing method for a positive electrode active material, a positive electrode active material, and a battery.

### BACKGROUND ART

Positive electrode active materials having an O2-type structure (O: Octahedral) are known. A positive electrode active material having an O2-type structure can be obtained by ion exchange of at least a portion of Na in a Na-containing oxide having a P2-type structure with Li, as disclosed in PTL 1.

### CITATION LIST

### PATENT LITERATURE

PTL 1 Japanese Unexamined Patent Publication No. 2011-170994

### SUMMARY

### TECHNICAL PROBLEM

Conventional positive electrode active materials having an O2-type structure have room for improvement in relation to resistance when applied to solid batteries, and alternatively have room for improvement particularly in relation to rate characteristics when applied to liquid-based batteries (batteries having liquid electrolyte).

### SOLUTION TO PROBLEM

The present application discloses the following plurality of aspects as means for solving the above problem.

### <Aspect 1>

A manufacturing method for a positive electrode active material used in solid batteries, the method comprising:
obtaining Na-containing oxide particles having a P2-type structure, and
subjecting at least a portion of Na in the Na-containing oxide particles to ion exchange with Li to obtain Li-containing oxide particles having an O2-type structure, wherein
the Na-containing oxide particles are spherical particles having an average particle diameter of 1.0 µm or more and less than 3.5 µm, and
the Li-containing oxide particles are spherical particles having a hollow single-layer structure.

### <Aspect 2>

The manufacturing method according to Aspect 1, wherein
the Na-containing oxide particles comprise, as constituent elements, at least one element among Mn, Ni, and Co; Na; and O.

### <Aspect 3>

A positive electrode active material used in solid batteries, comprising Li-containing oxide particles, wherein
the Li-containing oxide particles have an O2-type structure,
the Li-containing oxide particles are spherical particles having a hollow single-layer structure, and
the Li-containing oxide particles have an average particle diameter of 1.0 µm or more and less than 3.5 µm.

### <Aspect 4>

The positive electrode active material according to Aspect 3, wherein
the Li-containing oxide particles have a specific surface area of less than 4.5 m²/g.

### <Aspect 5>

The positive electrode active material according to Aspect 3 or 4, wherein
the Li-containing oxide particles comprise, as constituent elements, at least one element among Mn, Ni, and Co; Li; and O.

### <Aspect 6>

A solid battery, comprising a positive electrode active material layer, an electrolyte layer, and a negative electrode active material layer, wherein
the positive electrode active material layer comprises the positive electrode active material according to any of Aspects 3 to 5, and
the positive electrode active material layer comprises a solid electrolyte.

### <Aspect 7>

A manufacturing method for a positive electrode active material used in liquid-based batteries, the method comprising:
obtaining Na-containing oxide particles having a P2-type structure, and
subjecting at least a portion of Na in the Na-containing oxide particles to ion exchange with Li to obtain Li-containing oxide particles having an O2-type structure, wherein
the Na-containing oxide particles are spherical particles having an average particle diameter of 3.5 µm or more, and
the Li-containing oxide particles are spherical particles having a hollow multilayer structure.

### <Aspect 8>

The manufacturing method according to Aspect 7, wherein
the Na-containing oxide particles comprise, as constituent elements, at least one element among Mn, Ni, and Co; Na; and O.

### <Aspect 9>

A positive electrode active material used in liquid-based batteries (batteries having liquid electrolyte), comprising Li-containing oxide particles, wherein
the Li-containing oxide particles have an O2-type structure,
the Li-containing oxide particles are spherical particles having a hollow multilayer structure, and
the Li-containing oxide particles have an average particle diameter of 3.5 µm or more.

### <Aspect 10>

The positive electrode active material according to Aspect 9, wherein
the Li-containing oxide particles have a specific surface area of 4.5 m²/g or more.

### <Aspect 11>

The positive electrode active material according to Aspect 9 or 10, wherein
the Li-containing oxide particles comprise, as constituent elements, at least one element among Mn, Ni, and Co; Li; and O.

### <Aspect 12>

A liquid-based battery, comprising a positive electrode active material layer, an electrolyte layer, and a negative electrode active material layer, wherein
the positive electrode active material layer comprises the positive electrode active material according to any of Aspects 9 to 11, and
the positive electrode active material layer comprises a liquid electrolyte.

### ADVANTAGEOUS EFFECTS OF INVENTION

The positive electrode active material of the present disclosure has low resistance when applied to a solid battery. Alternatively, the positive electrode active material of the present disclosure has excellent rate characteristics when applied to a liquid-based battery.

### BRIEF DESCRIPTION OF DRAWINGS

FIG. 1A shows one example of the flow of a manufacturing method for a positive electrode active material used in solid batteries.
FIG. 1B shows one example of the flow of a manufacturing method for a positive electrode active material used in liquid-based batteries.
FIG. 2A schematically shows a cross-sectional shape of a spherical particle having a hollow single-layer structure.
FIG. 2B schematically shows a cross-sectional shape of a spherical particle having a hollow multilayer structure.
FIG. 2C schematically shows a cross-sectional shape of a spherical particle having a hollow multilayer structure.
FIG. 3 schematically shows one example of a configuration of a battery.
FIG. 4 shows cross-sectional shapes of positive electrode active materials A to D

### DESCRIPTION OF EMBODIMENTS

### 1. First aspect

The positive electrode active material according to the first aspect is used in solid batteries.

### 1.1 Manufacturing method for positive electrode active material used in solid batteries

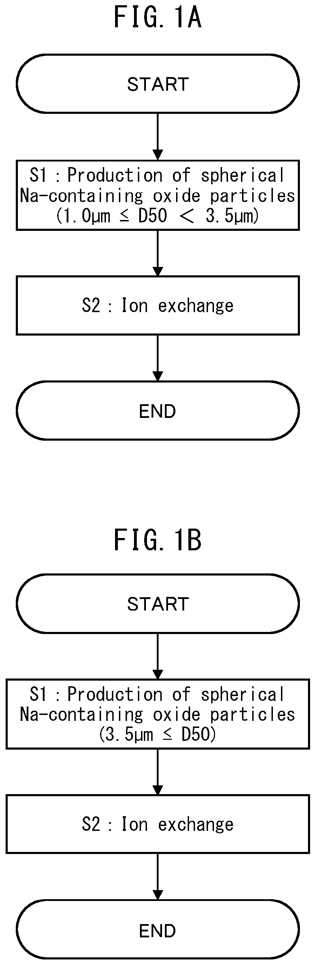

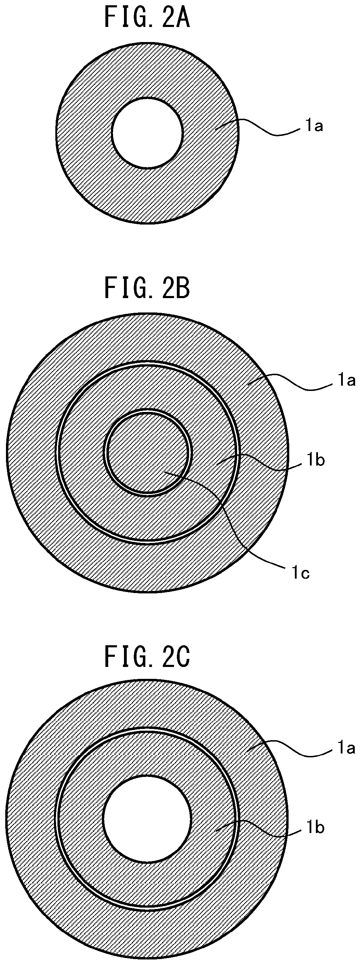

The manufacturing method for a positive electrode active material used in solid batteries, as shown in FIG. 1A, comprises
S1: obtaining Na-containing oxide particles having a P2-type structure, and
S2: subjecting at least a portion of Na in the Na-containing oxide particles to ion exchange with Li to obtain Li-containing oxide particles having an O2-type structure.
The Na-containing oxide particles are spherical particles having an average particle diameter of 1.0 µm or more and less than 3.5 µm. In addition, as shown in FIG. 2A, the Li-containing oxide particles are spherical particles having a hollow single-layer structure.

In the present application, "average particle diameter" means a 50% cumulative particle diameter (D50, median diameter) in a volume-based particle size distribution by a laser diffraction/scattering method, unless otherwise specified.

In the present application, a "spherical particle" means a particle having a circularity of 0.80 or greater. The circularity of the spherical particle may be 0.81 or greater, 0.82 or greater, 0.83 or greater, 0.84 or greater, 0.85 or greater, 0.86 or greater, 0.87 or greater, 0.88 or greater, 0.89 or greater, or 0.90 or greater. The circularity of a particle is defined as 4πS/L², where S is the orthographic area of the particle and L is the circumference (periphery) of an orthographic image of the particle. The circularity of a particle can be determined by observing the exterior or the cross-sectional shape of the particle with a scanning electron microscope (SEM), a transmission electron microscope (TEM), or an optical microscope. In the case of a plurality of particles, the circularity thereof is measured as an average value, for example, as follows.
(1) The particle distribution of the particles is first measured. Specifically, a 10% cumulative particle diameter (D10) and a 90% cumulative particle diameter (D90) in a volume-based particle size distribution are determined by a laser diffraction/scattering method.
(2) Image observation of the exterior of the particles measured for particle distribution is carried out with a SEM, TEM, or optical microscope, and of the particles contained in the image, 100 particles having an equivalent circle diameter (diameter of a circle having the same area as the orthographic area of the particles) of D10 or more and D90 or less, which are determined in (1), are arbitrarily extracted.
(3) The circularity of each of the extracted 100 particles are determined by image processing, and the average value thereof is regarding as the "circularity of the particles".

### 1.1.1 S1

In S1, Na-containing oxide particles having a P2-type structure are obtained. The Na-containing oxide particles obtained by S1 are spherical particles having an average particle diameter of 1.0 µm or more and less than 3.5 µm.

Na-containing oxide particles having a P2-type structure, having a predetermined average particle diameter, and being spherical can be produced, for example, via the following S1-1, S1-2, and S1-3.
S1-1: obtaining precursor particles
S1-2: coating surfaces of the precursor particles with a Na source to obtain composite particles
S1-3: firing the composite particles

In S1-1, precursor particles are obtained. The precursor particles may comprise, for example, at least one element among Mn, Ni, and Co. The precursor particles may comprise at least Mn and one or both of Ni and Co, or may comprise at least Mn, Ni, and Co. The precursor particles may be a salt comprising at least one element among Mn, Ni, and Co. The precursor particles, for example, may be at least one of a carbonate, a sulfate, a nitrate, and an acetate. Alternatively, the precursor particles may be a compound other than a salt. The precursor particles, for example, may be a hydroxide. The precursor particles may be a hydrate. The precursor particles may be a combination of a plurality of compounds. The precursor particle are spherical particles. The size of the precursor particles is determined according to the average particle diameter of the target Na-containing oxide particles.

In S1-1, a precipitate of the precursor particles above may be obtained by a coprecipitation method using an ion source that can form a precipitation with a transition metal ion in an aqueous solution and a transition metal compound comprising at least one element among Mn, Ni, and Co. As a result, spherical particles as precursor particles are obtained. An "ion source that can form a precipitation with a transition metal ion in an aqueous solution", for example, may be at least one selected from sodium salts such as sodium carbonate and sodium nitrate, sodium hydroxide, and sodium oxide. The transition metal compound may be a salt or hydroxide described above comprising at least one element among Mn, Ni, and Co. Specifically, in S 1-1, the ion source and the transition metal compound may each be formed into a solution, and the solutions may then be dropped and mixed to obtain a precipitate of the precursor particles. In this case, for example, water is used as a solvent. In this case, various sodium compounds may be used as a base, and ammonia aqueous solution may be added to adjust basicity. In the case of a coprecipitation method, the precipitate of the precursor particles is obtained, for example, by preparing an aqueous solution of a transition metal compound and an aqueous solution of sodium carbonate and dropping to mix the aqueous solutions. Alternatively, it is possible to obtain the precursor particles by a sol-gel method. Particularly, according to the coprecipitation method, spherical particles as precursor particles are efficiently obtained.

In S 1-1, the precursor particles may comprise an element M. The element M is at least one selected from B, Mg, Al, K, Ca, Ti, V, Cr, Cu, Zn, Ga, Ge, Sr Y, Zr, Nb, Mo, and W. These elements M, for example, have a function of stabilizing a P2-type structure and an O2-type structure. The method of obtaining precursor particles comprising an element M is not particularly limited. When precursor particles are obtained by a coprecipitation method in S1-1, for example, an aqueous solution of a transition metal compound comprising at least one of Mn, Ni, and Co, an aqueous solution of sodium carbonate, and an aqueous solution of a compound of the element M are prepared, the aqueous solutions are each added dropwise and mixed, whereby a precursor comprising at least one element among Mn, Ni, and Co and the element M is obtained. Alternatively, the element M is not added in S1-1, and the element M may be doped when carrying out a Na-doping firing in S1-2 and S1-3 described below.

In S1-2, the surfaces of the precursor particles obtained by S1-1 are coated with a Na source to obtain composite particles. The Na source may be a salt comprising Na, such as a carbonate or a nitrate, or may be a compound other than a salt, such as sodium oxide or sodium hydroxide. In S 1-2, the amount of the Na source for coating the surfaces of the precursor particles may be determined by taking into account the amount of Na lost during subsequent firing.

In S 1-2, the coverage of the Na source relative to the surfaces of the precursor particles is not particularly limited. For example, in S 1-2, the above composite particles may be obtained by coating 40% by area or greater, 50% by area or greater, 60% by area or greater, or 70% by area or greater of the surfaces of the above precursor particles with a Na source. When the precursor obtained by S1-1 consists of spherical particles, and the composite particles obtained by S1-2 are obtained by coating 40% by area or greater of the surfaces of the precursor particles with a Na source, Na-containing oxide particles having a P2-type structure tend to be spherical particles in S1-3 described below. When the coverage of the Na source is small, P2-type crystals tend to grow abnormally on the surfaces of the composite particles when the composite particles are fired, and the Na-containing oxide particles tend to be tabular particles. When the coverage of the Na sources is large, crystallites of P2-type crystals tend to be small when the composite particles are fired, and the Na-containing oxide particles tend to be spherical particles, which correspond to the shape of the precursor particles.

In S1-2, the method of coating the surfaces of the precursor particles with a Na source is not particularly limited. As described above, when coating 40% by area or greater of the surfaces of the precursor particles with a Na source, the method includes various methods. Examples include a rolling fluidized coating method or a spray drying method. Specifically, a coating solution in which a Na sources is dissolved is prepared, the coating solution is brought into contact with the surfaces of the precursor particles, and simultaneously or subsequently dried. By adjusting the conditions (such as temperature, time, and number of times) of coating, for example, 40% by area or greater of the surfaces of the precursor particles can be coated with a Na source.

In S1-2, the precursor particles may be coated with a Na source and an M source. For example, in S1-2, the precursor particles obtained by S1-1, a Na source, and an M source comprising at least one element selected from B, Mg, Al, K, Ca, Ti, V, Cr, Cu, Zn, Ga, Ge, Sr, Y, Zr, Nb, Mo, and W may be mixed to obtain composite particles. The M source, for example, may be a salt comprising an element M, such as a carbonate or a sulfate, or may be a compound other than a salt, such as an oxide or a hydroxide. The amount of the M source relative to the precursor particles may be determined in accordance with the chemical composition of the Na-containing oxide particles after firing.

In S1-3, the composite particles obtained by S1-2 are fired to obtain a Na-containing oxide having a P2-type structure. S1-3, for example, may comprise the following S1-3-1, S1-3-2, and S1-3-3.
S1-3-1: subjecting the composite particles to a pre-firing at a temperature of 300 °C or higher and lower than 700 °C for 2 h or more and 10 h or less
S1-3-2: following the pre-firing, subjecting the composite particles to a main firing at a temperature of 700 °C or higher and 1100 °C or lower for 30 min or more and 48 h or less S1-3-3: following the main firing, rapidly cooling the composite particles from a temperature T₁ of 200 °C or higher until a temperature T₂ of 100 °C or lower

In S1-3-1, the composite particles are subjected to a pre-firing at a temperature of 300 °C or higher and lower than 700 °C for 2 h or more and 10 h or less. In S1-3-1, the pre-firing may be carried out after optionally molding the above composite particles. The pre-firing is carried out at a temperature lower than that of main firing. By sufficiently carrying out a pre-firing, a P2 phase is appropriately generated in the main firing while generation of a crystal phase other than the P2 phase can be suppressed. Specifically, by setting the pre-firing temperature to 300 °C or higher and lower than 700 °C and the pre-firing time to 2 h or more and 10 h or less in S1-3-1, the composite particles can be subjected to a sufficient pre-firing, and a P2 phase is appropriately generated while generation of a phase other than the P2 phase can be suppressed in the Na-containing oxide particles obtained via S1-3-2 and S1-3-3 described below. As a result, the Li-containing oxide particles obtained via S2 have an O2-type structure, have a hollow single-layer structure, and are spherical. The pre-firing temperature may be 400 °C or higher and lower than 700 °C, 450 °C or higher and lower than 700 °C, 500 °C or higher and lower than 700 °C, 550 °C or higher and lower than 700 °C, or 550 °C or higher and 650 °C or lower. The pre-firing time may be 2 h or more and 8 h or less, 3 h or more and 8 h or less, 4 h or more and 8 h or less, 5 h or more and 8 h or less, or 5 h or more and 7 h or less. The pre-firing atmosphere is not particularly limited, and for example, may be an oxygen-containing atmosphere.

In S1-3-2, following the above pre-firing, the composite particles are subjected to a main firing at a temperature of 700 °C or higher and 1100 °C or lower for 30 min or more and 48 h or less. In S1-3-2, the main firing temperature of the composite particles is 700 °C or higher and 1100 °C or lower, and is preferably 800 °C or higher and 1000 °C or lower. When the main firing temperature is too low, a P2 phase is not generated, and when the main firing temperature is too high, an O3 phase, not a P2 phase, is easily generated. The heating conditions from the pre-firing temperature to the main firing temperature is not particularly limited. The main firing time, as described above, is 30 min or more and 48 h or less. The shape of the Na-containing oxide particles can be controlled by the main firing time. As described above, when the coverage of the Na source on the composite particles is 40% by area or greater, P2-type crystals having small crystallites are easily generated when the composite particles are fired. In S 1-3-2, by connecting one P2-type crystallite and another P2-type crystallite each other and growing the P2-type crystals along the surfaces of the particles, the shape of the Na-containing oxide particles corresponds to the shape of the precursor particles. For example, when the precursor particles are spherical particles, Na-containing oxide particles are formed into spherical particles. When the main firing time is too short, generation of the P2 phase is insufficient. When the main firing time is too long, the P2 phase is excessively grown, and the Na-containing oxide particles are formed into tabular particles, not spherical particles. As far as the present inventors have confirmed, when the main firing time is 30 min or more and 3 h or less, spherical particles of Na-containing oxide particles are easily obtained. The resulting Na-containing oxide particles after the main firing may have a plurality of crystallites present on the surfaces thereof and may have a structure in which crystallites are connected.

In S 1-3-3, following the above main firing, the composite particles (P2-type particles) after the main firing undergoes rapid cooling (cooled at a cooling rate of 20 °C/min or higher) from a temperature T₁ of 200 °C or higher until a temperature T₂ of 100 °C or lower. The above pre-firing and main firing are carried out in, for example, a heating furnace. In the step S 1-3-3, for example, the composite particles are subjected to a main firing in a heating furnace and then cooled to an arbitrary temperature T₁ of 200 °C or higher in the heating furnace, and after reaching the temperature T₁, the fired product is removed from the heating furnace and undergoes rapid cooling outside the furnace to an arbitrary temperature T₂ of 100 °C or lower. The temperature T₁ is an arbitrary temperature of 200 °C or higher, and may be an arbitrary temperature of 250 °C or higher. The temperature T₂ is an arbitrary temperature of 100 °C or lower, and may be an arbitrary temperature of 50 °C or lower or may be the cooling end temperature. From the temperature T₁ until reaching the temperature T₂, moisture easily infiltrates between layers of a P2-type structure by atomic vibrations or molecular motion. When cooling the composite particles (P2-type particles) after main firing, by shortening the time in the temperature region where such moisture easily infiltrates (i.e., rapid cooling), it is considered that the infiltration amount of moisture between layers of the P2-type structure is decreased. In this regard, in the step S 1-3-3, when cooling the composite particles after the main firing, by leaving the composite particles to cool from an arbitrary temperature T₁ of 200 °C or higher until reaching an arbitrary temperature T₂ of 100 °C or lower outside the furnace (for example, a dry atmosphere outside the furnace), the cooling rate from the temperature T₁ to the temperature T₂ is rapid (for example, 20 °C/min or higher), moisture does not easily infiltrate between layers of the P2-type structure, and collapse of the P2-type structure can be inhibited. As a result, Na can efficiently undergo ion exchange with Li in S2 described below, and the Li-containing oxide particles obtained via S2 have an O2-type structure, have a hollow single-layer structure, and are formed into spherical particles.

According to the above method, Na-containing oxide particles having a P2-type structure and having a spherical shape are obtained.

The Na-containing oxide particles have at least a P2-type structure (belonging to space group P63mc) as a crystal structure. The Na-containing oxide particles may have a crystal structure other than a P2-type structure, in addition to having a P2-type structure. Examples of the crystal structure other than a P2-type structure include various crystal structures formed when Na is deintercalated from a P2-type structure. The Na-containing oxide particles may have a P2-type structure as the main phase.

The Na-containing oxide particles may comprise, as constituent elements, at least one element among Mn, Ni, and Co; Na; and O. Particularly, when the constituent elements at least include Na, Mn, at least one of Ni and Co, and O, especially when the constituent elements include at least Na, Mn, Ni, Co, and O, performance of the positive electrode active material obtained via S2 described below is likely higher. The Na-containing oxide particles may have a chemical composition represented by Na_{c}Mnₓ₋ₚNi_{y-q}Co_{z-r}M_{p+q+r}O₂, where 0 < c ≤ 1.00, x + y + z = 1, and 0 ≤ p + q + r < 0.17. In addition, M is at least one element selected from B, Mg, Al, K, Ca, Ti, V, Cr, Fe, Cu, Zn, Ga, Ge, Sr, Y, Zr, Nb, Mo, and W. When the Na-containing oxide particles have such a chemical composition, a P2-type structure is more easily maintained. In the above chemical composition, c may be greater than 0, 0.10 or greater, 0.20 or greater, 0.30 or greater, 0.40 or greater, 0.50 or greater, or 0.60 or greater, and may be 1.00 or less, 0.90 or less, 0.80 or less, or 0.70 or less. x is 0 or greater and may be 0.10 or greater, 0.20 or greater, 0.30 or greater, 0.40 or greater, or 0.50 or greater, and is 1.00 or less and may be 0.90 or less, 0.80 or less, 0.70 or less, 0.60 or less, or 0.50 or less. y is 0 or greater and may be 0.10 or greater, or 0.20 or greater, and is 1.00 or less and may be 0.90 or less, 0.80 or less, 0.70 or less, 0.60 or less, 0.50 or less, 0.40 or less, 0.30 or less, or 0.20 or less. z is 0 or greater and may be 0.10 or greater, 0.20 or greater, or 0.30 or greater, and is 1.00 or less and may be 0.90 or less, 0.80 or less, 0.70 or less, 0.60 or less, 0.50 or less, 0.40 or less, or 0.30 or less. The element M has a small contribution towards charging and discharging. In this regard, in the above chemical composition, by having p + q + r less than 0.17, high charging and discharging capacities are easily ensured. p + q + r may be 0.16 or less, 0.15 or less, 0.14 or less, 0.13 or less, 0.12 or less, 0.11 or less, or 0.10 or less. By including the element M, P2-type and O2-type structures are easily stabilized. In the above chemical composition, p + q + r is 0 or greater, and may be 0.01 or greater, 0.02 or greater, 0.03 or greater, 0.04 or greater, 0.05 or greater, 0.06 or greater, 0.07 or greater, 0.08 or greater, 0.09 or greater, or 0.10 or greater. The composition of O is approximately 2, but may be variable without being limited to exactly 2.0.

In the first aspect, spherical particles having an average particle diameter of 1.0 µm or more and less than 3.5 µm are used as Na-containing oxide particles in S2 described below. The spherical Na-containing oxide particles, for example, can be produced by producing composite particles using spherical precursor particles and adjusting the firing conditions of the composite particles, as described above. By using precursor particles having an average particle diameter of less than 3.5 µm and being spherical, Na-containing oxide particles having an average particle diameter of 1.0 µm or more and less than 3.5 µm and having a spherical shape are obtained. Alternatively, after spherical Na-containing oxide particle are manufactured using precursor particles having random sizes, airflow classification or sieving may be carried out, and spherical Na-containing oxide particles having an average particle diameter of 1.0 µm or more and less than 3.5 µm may be collected.

The average particle diameter of the Na-containing oxide particles is 1.0 µm or more and less than 3.5 µm, and may be 1.2 µm or more and 3.3 µm or less, or 1.4 µm or more and 3.0 µm or less. By having the average particle diameter of 1.0 µm or more and less than 3.5 µm for the Na-containing oxide particles, Li-containing oxide particles obtained via S2 described below have a hollow single-layer structure. When the Na-containing oxide particles are too small, a hollow structure in the Li-containing oxide particles cannot be obtained.

### 1.1.2 S2

In S2, at least a portion of Na in the Na-containing oxide particles obtained by S1 is subjected to ion exchange with Li to obtain Li-containing oxide particles having an O2-type structure. The Li-containing oxide particles obtained by S2 are spherical particles having a hollow single-layer structure.

In S2, the method for ion exchange includes, for example, a method using an aqueous solution comprising a lithium halide and a method using a mixture (for example, a molten salt) of a lithium halide and another lithium salt. From the viewpoint that a P2-type structure is easily broken by water infiltration and the viewpoint of crystallinity, of the above two methods, a method using a molten salt is preferable. Specifically, the above Na-containing oxide particles having a P2-type structure and the molten salt are mixed and heated to a temperature of the melting point of the molten salt or higher, whereby at least a portion of Na in the Na-containing oxide particles can be substituted with Li by ion exchange.

In S2, the lithium halide constituting the molten salt is preferably at least one of lithium chloride, lithium bromide, and lithium iodide. An additional lithium salt constituting the molten salt is preferably lithium nitrate. By using a molten salt, the melting point is lowered compared to when the lithium halide and the additional lithium salt are used independently, and ion exchange at a lower temperature is possible.

In S2, the temperature of the ion exchange, for example, may be the melting point of the above molten salt or higher and 600 °C or lower, 500 °C or lower, 400 °C or lower, or 300 °C or lower. When the temperature of the ion exchange is too high, an O3-type structure, which is a stable phase, not an O2-type structure, is easily generated. From the viewpoint of shortening the time required for the ion exchange, the temperature of the ion exchange is preferably as high as possible.

In S2, by subjecting at least a portion of Na in the spherical Na-containing oxide particles to ion exchange with Li, Na having a large ionic radius is substituted with Li having a small ionic radius, and the interlayer distance in the crystal structure is shortened, causing a contraction. Due to such a contraction during ion exchange, voids are generated inside the particles. When the size of a Na-containing oxide particles is small, it is considered that the contraction generates voids in the center portion of the particle, and as a result, a hollow single-layer structure is obtained. When the size of a Na-containing oxide particle is large, it is considered that due to the contraction, cracks occur in the peripheral direction inside the particle, and as a result, a large number of "shells" are formed and a hollow multilayer structure described below is obtained. When a Na-containing oxide particles has a shape other than spherical, uniform contraction does not occur inside the particle, and an appropriate hollow structure cannot be obtained.

According to the above method, Li-containing oxide particles having an O2-type structure, having a hollow single-layer structure, being spherical, and having an average particle diameter of 1.0 µm or more and less than 3.5 µm are obtained. The Li-containing oxide particles are used as a positive electrode active material of a solid battery.

### 1.2 Positive electrode active material used in solid batteries

The positive electrode active material used in solid batteries according to the first aspect comprises Li-containing oxide particles. The Li-containing oxide particles have an O2-type structure. In addition, as shown in FIG. 2A, the Li-containing oxide particles are spherical particles having a hollow single-layer structure. Further, the Li-containing oxide particles have an average particle diameter of 1.0 µm or more and less than 3.5 µm.

### 1.2.1 Crystal structure

The Li-containing oxide particles according to the first aspect have at least an O2-type structure (belonging to space group P63mc) as a crystal structure. The Li-containing oxide particles according to one embodiment may have a crystal structure other than an O2-type structure, in addition to having an O2-type structure. Examples of the crystal structure other than an O2-type structure include a T#2-type structure (belonging to space group Cmca) and an O6-type structure (belonging to space group R-3m, with a c-axis length of 2.5 nm or more and 3.5 nm or less, typically 2.9 nm or more and 3.0 nm or less, and differing from an O3-type structure belonging to the same space group R-3m), formed when Li is deintercalated from an O2-type structure. The Li-containing oxide particles according to one embodiment may have an O2-type structure as the main phase. The Li-containing oxide particles according to one embodiment may have a structure (for example, O6-type structure) other than an O2-type structure as the main phase. In the Li-containing oxide particles, a crystal structure constituting the main phase can change depending on the charging and discharging states.

### 1.2.2 Crystallite

The Li-containing oxide particles according to the first aspect may be polycrystals comprising a plurality of crystallites. For example, the Li-containing oxide particles according to one embodiment may each be composed of a plurality of crystallites on the surface thereof. In other words, the Li-containing oxide particles may each have a structure in which a plurality of crystallites are connected to each other on the surface thereof. When the surfaces of the Li-containing oxide particles are each composed of a plurality of crystallites, crystal grain boundaries are present on the surface. The crystal grain boundaries may be entrances and exits for intercalation. Specifically, when the Li-containing oxide particles are polycrystals each comprising a plurality of crystallites, expected effects include a decrease in reaction resistance due to the increased number of intercalation entrances and exits, a decrease in diffusion resistance due to shortened migration distance of lithium ions, and prevention of cracking due to a decrease in absolute quantities of expansion and contraction amounts during charging and discharging. The size of the crystallites may be large or small. However, it is considered that the smaller the size of the crystallites, the more crystal grain boundaries there are, and the more easily the above advantageous effects are exhibited. For example, when the diameter of crystallites constituting the Li-containing oxide particles is less than 1 µm, higher performance is easily obtained. Note that the "crystallite" and "diameter of crystallite" can be determined by observing the surfaces of the Li-containing oxide particles with a scanning electron microscope (SEM) or a transmission electron microscope (TEM). Specifically, when a surface of a Li-containing oxide particle is observed and one closed region surrounded by crystal grain boundaries is observed, the region is regarded as a "crystallite". The maximum Feret diameter of the crystallite is determined, and this is regarded as the "diameter of crystallite". Alternatively, the diameter of the crystallite can be determined with EBSD or XRD. For example, the diameter of crystallite can be determined based on the Scherrer equation from the half-width of the diffraction line of the XRD pattern. In the Li-containing oxide particles, when the diameter of the crystallite specified by any of the methods is less than 1 µm, higher performance is easily obtained. The crystallites constituting the Li-containing oxide particles may each have a first surface exposed on the particle, and the first surface may be planar. Specifically, the surfaces of the Li-containing oxide particles may have a structure in which a plurality of planes are connected. As described above, when manufacturing the Li-containing oxide particles, crystallites having a planar first surface are easily obtained by growing crystallites on a surface of a particle until one crystallite and another crystallite are connected to each other.

### 1.2.3 Chemical composition

The Li-containing oxide particles according to the first aspect, for example, may comprise, as constituent elements, at least one element among Mn, Ni, and Co; Li; and O. In the Li-containing oxide particles, particularly when at least Li, Mn, one or both of Ni and Co, and O are included as constituent elements, especially when at least Li, Mn, Ni, Co, and O are included as constituent elements, higher performance is easily obtained. The Li-containing oxide particles may have a chemical composition represented by LiₐNa_{b}Mnₓ₋ₚNi_{y-q}Co_{z-r}M_{p+q+r}O₂ (where 0 < a ≤ 1.00; 0 ≤ b ≤ 0.20; x + y + z = 1; and 0 ≤ p + q + r < 0.17, and the element M is at least one selected from B, Mg, Al, K, Ca, Ti, V, Cr, Fe, Cu, Zn, Ga, Ge, Sr, Y, Zr, Nb, Mo, and W). When the Li-containing oxide particles have such a chemical composition, an O2-type structure is easily maintained. In the chemical composition above, a is greater than 0 and may be 0.10 or greater, 0.20 or greater, 0.30 or greater, 0.40 or greater, 0.50 or greater, or 0.60 or greater, and is 1.00 or less and may be 0.90 or less, 0.80 or less, or 0.70 or less. In the chemical composition above, b may be 0 or greater, 0.01 or greater, 0.02 or greater, or 0.03 or greater, and may be 0.20 or less, 0.15 or less, or 0.10 or less. In addition, x is 0 or greater and may be 0.10 or greater, 0.20 or greater, 0.30 or greater, 0.40 or greater, or 0.50 or greater, and is 1.00 or less and may be 0.90 or less, 0.80 or less, 0.70 or less, 0.60 or less, or 0.50 or less. Further, y is 0 or greater and may be 0.10 or greater, or 0.20 or greater, and is 1.00 or less and may be 0.90 or less, 0.80 or less, 0.70 or less, 0.60 or less, 0.50 or less, 0.40 or less, 0.30 or less, or 0.20 or less. Moreover, z is 0 or greater and may be 0.10 or greater, 0.20 or greater, or 0.30 or greater, and is 1.00 or less and may be 0.90 or less, 0.80 or less, 0.70 or less, 0.60 or less, 0.50 or less, 0.40 or less, or 0.30 or less. The element M has a small contribution towards charging and discharging. In this regard, in the above chemical composition, by having p + q + r less than 0.17, high charging and discharging capacities are easily ensured. p + q + r may be 0.16 or less, 0.15 or less, 0.14 or less, 0.13 or less, 0.12 or less, 0.11 or less, or 0.10 or less. By including the element M, an O2-type structure is easily stabilized. In the above chemical composition, p + q + r is 0 or greater, and may be 0.01 or greater, 0.02 or greater, 0.03 or greater, 0.04 or greater, 0.05 or greater, 0.06 or greater, 0.07 or greater, 0.08 or greater, 0.09 or greater, or 0.10 or greater. The composition of O is approximately 2, but may be variable without being limited to exactly 2.0.

### 1.2.4 Hollow single-layer structure

The Li-containing oxide particles according to the first aspect have a hollow single-layer structure. As shown in FIG. 2A, "hollow single-layer structure" means a structure having an outer shell 1a and a hollow space (void) inside the outer shell in a cross-sectional shape of a particle. The surface of the outer shell 1a, for example, can be composed of a plurality of crystallites. In a Li-containing oxide particle, the outer shell 1a may be configured such that a plurality of crystallites are connected along the outer periphery of the particle. The size of the crystallites constituting the outer shell 1a may be large or small. However, it is considered that the smaller the size of the crystallites, the more grain boundaries there are on a particle surface, and the more easily the advantageous effects described above are exhibited. The crystallites constituting the outer shell 1a may each have a first surface exposed on the particle surface, and the first surface may be planar. The size of the crystallites is as described above. The outer shape (outer peripheral shape) of the outer shell 1a is spherical, as described above. The inner shape (inner peripheral shape) of the outer shell 1a is not particularly limited, and may be a shape that corresponds to the outer shape. However, it is not necessary for the outer shape and inner shape of the outer shell 1a to be parallel to each other. The outer shape and inner shape of the outer shell 1a may both have unevenness. In addition, the outer shell 1a may have voids and gaps. Specifically, the crystallites constituting the outer shell 1a may have defects such as voids and gaps. Further, the outer shell 1a can have a thickness. The thickness of the outer shell 1a, for example, may be 5% or greater and less than 50%, or 5% or greater and 45% or less of the diameter (equivalent circle diameter of cross-sectional shape) of the Li-containing oxide particles. The size of voids present on the inside of the outer shell 1a (porosity) is not particularly limited.

As shown in FIG. 2A, the Li-containing oxide particles according to the first aspect can also be said to have a core-shell structure. Specifically, the Li-containing oxide particles according to one embodiment can have a shell and a core (void) arranged inside the shell. The "shell" is as described above. The "core" may be entirely a void.

### 1.2.5 Spherical particles

As described above, Li-containing oxide particles having an O2-type structure are obtained by subjecting at least a portion of Na in the Na-containing oxide particles having a P2-type structure to ion exchange with Li. The P2-type structure has a hexagonal crystal system and a large Na ion diffusion coefficient, and crystal growth easily occurs in a specific direction. Particularly, when a transition metal element constituting the P2-type structure includes at least one of Mn, Ni, and Co, tabular crystals are grown easily in a specific direction. Therefore, conventionally, Na-containing oxide particles having a P2-type structure can only be manufactured in a tabular form having a large aspect ratio, wherein crystal growth direction is biased in a specific direction, and as a result, Li-containing oxide particles having an O2-type structure can only be manufactured in a tabular form. Further, the tabular growth of the P2-type structure has been considered a fundamental principle and unavoidable. Therefore, on the premise that conventional O2-type Li-containing oxide particles are tabular, the performance thereof as an active material has been improved by controlling the chemical composition and crystal structure thereof.

As shown in FIG. 2A, the Li-containing oxide particles according to the first aspect are spherical particles. The spherical Li-containing oxide particles have an advantage in suppressing the growth of crystallites more easily and forming smaller crystallites more easily, compared to non-spherical Li-containing oxide particles (for example, the tabular particles described above). Specifically, when Li-containing oxide particles are spherical, reaction resistance is lowered by the decrease in crystallite size, and internal diffusion resistance is easily lowered. Further, it is considered that the degree of curvature is decreased by the spheroidization, and the lithium-ion conduction resistance within the layer is lowered when the Li-containing oxide particles are applied to a positive electrode active material layer. As a result, the resistance is lowered and excellent rate characteristics are easily obtained in spherical Li-containing oxide particles, compared to non-spherical Li-containing oxide particles.

### 1.2.6 Average particle diameter

The Li-containing oxide particles according to the first aspect have an average particle diameter of 1.0 µm or more and less than 3.5 µm. The average particle diameter of the Li-containing oxide particles may be 1.2 µm or more and 3.3 µm or less, or 1.4 µm or more and 3.0 µm or less. As described above, when the average particle diameter of the Li-containing oxide particles is 1.0 µm or more and less than 3.5 µm, the Li-containing oxide particles have a hollow single-layer structure and have low resistance when applied to solid batteries. When the Li-containing oxide particles are too small, agglomeration of particles occurs easily. By having the average particle size of the Li-containing oxide particles at 1.0 µm or more, such a problem of agglomeration is less likely to occur.

### 1.2.7 Specific surface area

The specific surface area of the Li-containing oxide particles according to the first aspect is not particularly limited. However, when use as a positive electrode active material of a solid battery is assumed, it is considered that the smaller the specific surface area of the Li-containing oxide particles, the fewer voids there are inside the Li-containing oxide particles, and the more easily ion conduction paths are ensured. In this regard, when the Li-containing oxide particles have a hollow single-layer structure, are spherical particles, and have an average particle diameter of 1.0 µm or more and less than 3.5 µm, wherein the Li-containing oxide particles have a specific surface area of less than 4.5 m²/g, higher performance as a positive electrode active material for solid batteries can be expected. The specific surface area of the Li-containing oxide particles may be 1.0 m²/g or more and less than 4.5 m²/g, 2.0 m²/g or more and 4.0 m²/g or less, or 2.5 m²/g or more and 3.5 m²/g or less.

### 1.2.8 Supplemental

The positive electrode active material according to the first aspect may consist only of the above Li-containing oxide particles, or may comprise another positive electrode active material (additional positive electrode active material), in addition to the above Li-containing oxide particles. From the viewpoint of further enhancing the effect of the technique of the present disclosure, the ratio of the additional positive electrode active material in the entire positive electrode active material may be small. For example, when the entirety of the positive electrode active material is 100% by mass, the content of the above Li-containing oxide particles may be 50% by mass or greater and 100% by mass or less, 60% by mass or greater and 100% by mass or less, 70% by mass or greater and 100% by mass or less, 80% by mass or greater and 100% by mass or less, 90% by mass or greater and 100% by mass or less, 95% by mass or greater and 100% by mass or less, or 99% by mass or greater and 100% by mass or less.

### 1.3 Solid battery

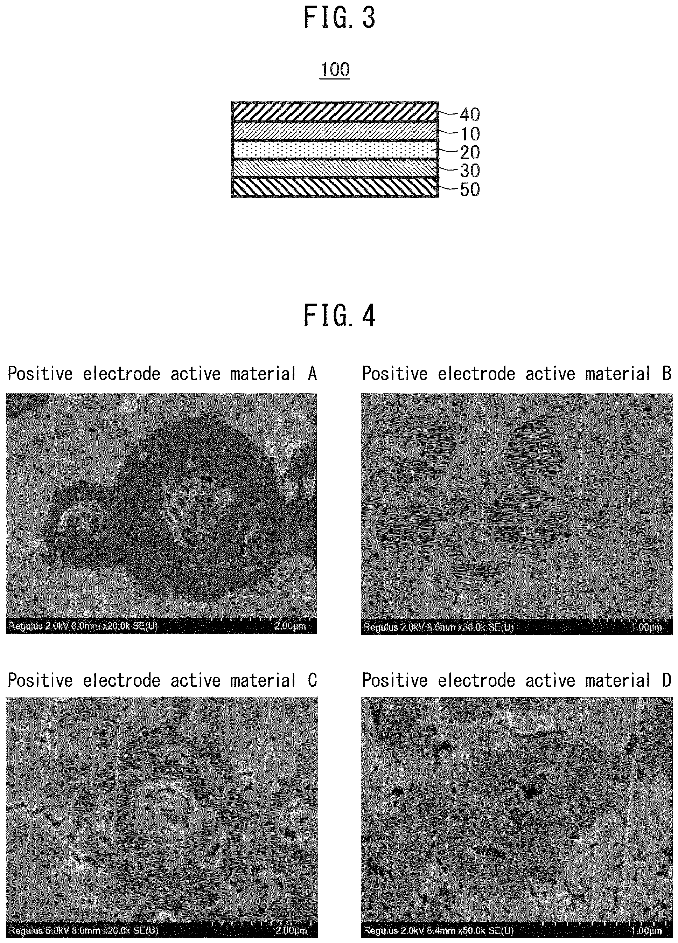

The positive electrode active material according to the first aspect is used as a positive electrode active material of a solid battery. "Solid battery" means a battery comprising a solid electrolyte. The solid battery may comprise a solid electrolyte and a liquid component, or may be an all-solid battery free of a liquid component. The electrolyte contained in the solid battery may be entirely a solid electrolyte, or may be a combination of a solid electrolyte and a liquid electrolyte. As shown in FIG. 3, the solid battery 100 according to one embodiment comprises a positive electrode active material layer 10, an electrolyte layer 20, and a negative electrode active material layer 30. The positive electrode active material layer 10 comprises the above positive electrode active material according to the first aspect. In addition, the positive electrode active material layer 10 comprises a solid electrolyte.

### 1.3.1 Positive electrode active material layer

The positive electrode active material layer 10 comprises at least the above positive electrode active material according to the first aspect and a solid electrolyte, and may further optionally comprise an additional electrolyte, a conductive aid, and a binder. Further, the positive electrode active material layer 10 may additionally comprise various additives. The contents of the positive electrode active material, electrolyte, conductive aid, and binder in the positive electrode active material layer 10 need only to be appropriately determined in accordance with the target battery performance. For example, when the entirety (entire solid content) of the positive electrode active material layer 10 is 100% by mass, the content of the positive electrode active material may be 40% by mass or greater, 50% by mass or greater, or 60% by mass or greater, and may be 100% by mass or less or 90% by mass or less. The shape of the positive electrode active material layer 10 is not particularly limited, and for example, may be a sheet-like positive electrode active material layer 10 having a substantially flat surface. The thickness of the positive electrode active material layer 10 is not particularly limited, and for example, may be 0.1 µm or more or 1 µm or more, and may be 2 mm or less or 1 mm or less.

### 1.3.1.1 Positive electrode active material

The positive electrode active material is as described above. Specifically, the positive electrode active material layer 10 comprises at least the above Li-containing oxide particles as a positive electrode active material. As described above, the positive electrode active material may consist only of the above Li-containing oxide particles, or may comprise the above Li-containing oxide particles and another positive electrode active material (an additional positive electrode active material). From the viewpoint of further enhancing the effect according to the technique of the present disclosure, the ratio of the additional positive electrode active material to the entirety of the positive electrode active materials may be small. For example, when the entirety of the positive electrode active materials is 100% by mass, the content of the above Li-containing oxide particles is 50% by mass or greater and 100% by mass or less, 60% by mass or greater and 100% by mass or less, 70% by mass or greater and 100% by mass or less, 80% by mass or greater and 100% by mass or less, 90% by mass or greater and 100% by mass or less, 95% by mass or greater and 100% by mass or less, or 99% by mass or greater and 100% by mass or less.

Any known positive electrode active material for solid batteries can be adopted as an additional positive electrode active material. The additional positive electrode active material, for example, may be at least one selected from various lithium-containing compounds other than the above Li-containing oxide, elemental sulfur, and sulfur compounds. The lithium-containing compound as the additional positive electrode active material may be a Li-containing oxide comprising at least one element M; Li; and O. The element M, for example, may be at least one selected from Mn, Ni, Co, Al, Mg, Ca, Sc, V, Cr, Cu, Zn, Ga, Ge, Y, Zr, Sn, Sb, W, Pb, Bi, Fe, and Ti, or may be at least one selected from the group consisting of Mn, Ni, Co, Al, Fe, and Ti. More specifically, the Li-containing oxide as the additional positive electrode active material may be at least one selected from lithium cobaltate, lithium nickelate, lithium manganate, lithium nickel cobaltate, lithium nickel manganate, lithium cobalt manganate, lithium nickel-cobalt-manganese oxide (Li_{1±a}NiₓCo_{y}Mn_{z}O_{2±δ} (for example, 0 < x < 1, 0 < y < 1, 0 < z < 1, and x + y + z = 1)), spinel-based lithium compounds (heteroelement-substituted Li-Mn spinels having a composition represented by Li₁₊ₓMn_{2-x-y}M_{y}O₄ (M is one or more selected from Al, Mg, Co, Fe, Ni, and Zn)), lithium nickel-cobalt-aluminum oxide (for example, Li_{1±a}NiₚCo_{q}AlᵣO_{2±δ} (for example, p + q + r = 1)), lithium titanate, and lithium metal phosphate (such as LiMPO₄; M is one or more selected from Fe, Mn, Co, and Ni). Particularly, when the additional positive electrode active material comprises a Li-containing oxide at least comprising, as constituent elements, at least one of Ni, Co, and Mn; Li; and O, performance of the battery tends to be higher. Alternatively, when the additional positive electrode active material comprises a Li-containing oxide at least comprising, as constituent elements, at least one of Ni, Co, and Al; Li; and O, performance of the battery tends to be higher. The additional positive electrode active material may be of one type used alone, or may be of two or more types used in combination. The shape of the additional positive electrode active material needs only to be any general shapes of positive electrode active materials of batteries. The additional positive electrode active material, for example, may be particulate. The additional positive electrode active material may be solid, or may have voids therein, for example, may be porous or hollow. The additional positive electrode active material may be of primary particles, or may be of secondary particles of a plurality of agglomerated primary particles. The average particle diameter D50 of the additional positive electrode active material, for example, may be 1 nm or more, 5 nm or more, or 10 nm or more, and may be 500 µm or less, 100 µm or less, 50 µm or less, or 30 µm or less.

### 1.3.1.2 Protective layer

A protective layer having ion-conducting properties may be formed on the surface of the positive electrode active material. Specifically, the positive electrode active material layer 10 may comprise a composite of a positive electrode active material and a protective layer, and at least a portion of the surface of the positive electrode active material of the composite may be covered by the protective layer. As a result, for example, a reaction between the positive electrode active material and another battery material (such as a sulfide solid electrolyte described below) is easily suppressed. The protective layer having ion-conducting properties can comprise various ion-conducting compounds. The ion-conducting compound, for example, may be at least one selected from an ion-conducting oxide and an ion-conducting halide.

The ion-conducting oxide, for example, may comprise at least one element selected from B, C, Al, Si, P, S, Ti, La, Zr, Nb, Mo, Zn, and W; Li; and O. The ion-conducting oxide may be an oxynitride comprising N. More specifically, the ion-conducting oxide may be at least one selected from Li₃BO₃, LiBO₂, Li₂CO₃, LiAlO₂, Li₄SiO₄, Li₂SiO₃, Li₃PO₄, Li₂SO₄, Li₂TiO₃, Li₄Ti₅O₁₂, Li₂Ti₂O₅, Li₂ZrO₃, LiNbO₃, Li₂MoO₄, Li₂WO₄, LiPON, Li₂O-LaO₂, and Li₂O-ZnO₂. The ion-conducting oxide may have a portion of elements substituted by various doping elements.

The ion-conducting halide, for example, may be at least one of various compounds exemplified as a halide solid electrolyte described below. The halide having ion-conducting properties, for example, may comprise at least one element selected from the group consisting of Mg, Ca, Sr, Ba, Zn, Sn, Al, Sc, Ga, Bi, Sb, Zr, Hf, Ti, Ta, Nb, W, Y, Gd, Tb, and Sm; at least one halogen element selected from the group consisting of Cl, Br, I, and F; and Li. The halide having ion-conducting properties may comprise at least one selected from the group consisting of Ti, Al, Gd, Ca, Zr, and Y; at least one selected from the group consisting of Cl, Br, I, and F; and Li. The halide having ion-conducting properties may comprise at least one element selected from the group consisting of Ti and Al; at least one element selected from the group consisting of Cl, Br, I, and F; and Li. The halide having ion-conducting properties, for example, may be a complex halide of Li, Ti, Al, and F.

The coverage (area ratio) of the protective layer relative to the surface of the positive electrode active material, for example, may be 70% or greater, may be 80% or greater, or may be 90% or greater. The thickness of the protective layer, for example, may be 0.1 nm or more or 1 nm or more, and may be 100 nm or less or 20 nm or less.

### 1.3.1.2 Electrolyte

The positive electrode active material layer 10 comprises a solid electrolyte. The solid electrolyte needs only to be any known solid electrolyte. The solid electrolyte may be an inorganic solid electrolyte or an organic polymer electrolyte. Particularly, an inorganic solid electrolyte has excellent ion-conducting properties and heat resistance. Examples of the inorganic solid electrolyte include oxide solid electrolytes, sulfide solid electrolytes, and inorganic solid electrolytes having ion-binding properties. Among the inorganic solid electrolytes, the performance of sulfide solid electrolytes, particularly sulfide solid electrolytes comprising at least Li, S, and P as constituent elements, is high. Alternatively, among the inorganic solid electrolytes, the performance of solid electrolytes having ion-binding properties, particularly solid electrolytes comprising at least Li, Y, and a halogen (at least one of Cl, Br, I, and F) as constituent elements, is high. The solid electrolyte may be amorphous, or may be crystalline. The solid electrolyte may be particulate. The average particle diameter (D50) of the solid electrolyte, for example, may be 10 nm or more and 10 µm or less. The ion conductivity of the solid electrolyte at 25 °C, for example, may be 1 × 10⁻⁵ S/cm or more, 1 × 10⁻⁴ S/cm or more, or 1 × 10⁻³ S/cm or more. The solid electrolyte may be of one type used alone, or may be of two or more types used in combination.

The oxide solid electrolyte may be one or more selected from lithium lanthanum zirconate, LiPON, Li₁₊ₓAlₓGe₂₋ₓ(PO₄)₃, Li-SiO-based glass, and Li-Al-S-O-based glass. When an oxide solid electrolyte and a liquid electrolyte are combined, ion-conducting properties can be improved.

The sulfide solid electrolyte may be a glass-based sulfide solid electrolyte (sulfide glass), may be a glass-ceramic-based sulfide solid electrolyte, or may be a crystal-based sulfide solid electrolyte. The sulfide glass is amorphous. The sulfide glass may have a glass transition temperature (Tg). When the sulfide solid electrolyte has a crystal phase, examples of the crystal phase include Thio-LISICON-type crystal phase, LGPS-type crystal phase, and argyrodite-type crystal phase. The sulfide solid electrolyte may be particulate. The average particle diameter (D50) of the sulfide solid electrolyte, for example, may be 10 nm or more and 100 µm or less.

The sulfide solid electrolyte, for example, may contain Li element, an X element (X is at least one of P, As, Sb, Si, Ge, Sn, B, Al, Ga, and In), and S element. In addition, the sulfide solid electrolyte may further contain at least one of O element and a halogen element. Further, the sulfide solid electrolyte may contain S element as an anionic element main component.

The sulfide solid electrolyte, for example, may be at least one selected from Li₂S-P₂S₅, Li₂S-P₂S₅-LiI, Li₂S-P₂S₅-GeS₂, Li₂S-P₂S₅-Li₂O, Li₂S-P₂S₅-Li₂O-LiI, Li₂S-P₂S₅-LiI-LiBr, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numbers, and Z is any of Ge, Zn, and Ga), Li₂S-GeS₂, Li₂S-SiS₂-Li₃PO₄, and Li₂S-SiS₂-LiₓMO_{y} (where x and y are positive numbers, and M is any of P, Si, Ge, B, Al, Ga, and In).

The composition of the sulfide solid electrolyte is not particularly limited. Examples thereof include xLi₂S·(100 - x)P₂S₅ (70 ≤ x ≤ 80) and yLiI·zLiBr·(100 - y - z)(xLi₂S·(1 - x)P₂S₅) (0.7 ≤ x ≤ 0.8, 0 ≤ y ≤ 30, and 0 ≤ z ≤ 30). Alternatively, the sulfide solid electrolyte may have a composition represented by general formula: Li₄₋ₓGe₁₋ₓPₓS₄ (0 < x < 1). In the above general formula, at least a portion of Ge may be substituted with at least one of Sb, Si, Sn, B, Al, Ga, In, Ti, Zr, V, and Nb. In the above general formula, at least a portion of P may be substituted with at least one of Sb, Si, Sn, B, Al, Ga, In, Ti, Zr, V, and Nb. In the above general formula, a portion of Li may be substituted with at least one of Na, K, Mg, Ca, and Zn. In the above general formula, a portion of S may be substituted with a halogen (at least one of F, Cl, Br, and I). Alternatively, the sulfide solid electrolyte may have a composition represented by Li₇₋ₐPS₆₋ₐXₐ (X is at least one of Cl, Br, and I, and a is a number of 0 or greater and 2 or less). a may be 0 or may be greater than 0. In the latter case, a may be 0.1 or greater, may be 0.5 or greater, or may be 1 or greater, a may be 1.8 or less, or may be 1.5 or less.

The solid electrolyte having ion-binding properties, for example, may comprise at least one element selected from the group consisting of Mg, Ca, Sr, Ba, Zn, Sn, Al, Sc, Ga, Bi, Sb, Zr, Hf, Ti, Ta, Nb, W, Y, Gd, Tb, and Sm. These elements can generate cations in water. The ion-binding solid electrolyte material, for example, may comprise at least one halogen element selected from the group consisting of Cl, Br, I, and F. These elements can generate anions in water. The solid electrolyte having ion-binding properties may comprise at least one selected from the group consisting of Gd, Ca, Zr, and Y, at least one selected from the group consisting of Cl, Br, I, and F, and Li. The solid electrolyte having ion-binding properties comprises Li and Y, and may comprise at least one selected from the group consisting of Cl, Br, I, and F. More specifically, the solid electrolyte having ion-binding properties may comprise Li, Y, Cl, and Br, may comprise Li, Ca, Y, Gd, Cl, and Br, or may comprise Li, Zr, Y, and Cl. Even more specifically, the solid electrolyte having ion-binding properties may be at least one of Li₃YBr₂Cl₄, Li_{2.8}Ca_{0.1}Y_{0.5}Gd_{0.5}Br₂Cl₄, and Li_{2.5}Y_{0.5}Zr_{0.5}Cl₆.

The solid electrolyte having ion-binding properties may be a halide solid electrolyte. A halide solid electrolyte has excellent ion-conducting properties. The halide solid electrolyte may have a composition represented by, for example, formula (A):

Li_{α}M_{β}X_{γ} ... (A)

where α, β, and γ are each independently a value greater than 0, M is at least one selected from the group consisting of metal elements other than Li and semimetal elements, and X is at least one selected from the group consisting of Cl, Br, and I. Note that a "semimetal element" may be at least one selected from the group consisting of B, Si, Ge, As, Sb, and Te. Further, a "metal element" may include (i) all of the elements contained from Group 1 to Group 12 of the periodic table (excluding hydrogen) and (ii) all of the elements contained from Group 13 to Group 16 of the periodic table (excluding B, Si, Ge, As, Sb, Te, C, N, P, O, S, and Se). A metal element can form an inorganic compound with halide ions and form cations.

In the formula (A), M may comprise Y (i.e., yttrium). A halide solid electrolyte comprising Y may have a composition represented by LiₐMe_{b}Y_{c}X₆ (where a + mb + 3c = 6, c > 0, Me is at least one selected from the group consisting of metal elements and semimetal elements other than Li and Y, and m is the valence of Me). Me, for example, may be at least one selected from the group consisting of Mg, Ca, Sr, Ba, Zn, Sc, Al, Ga, Bi, Zr, Hf, Ti, Sn, Ta, and Nb.

The halide solid electrolyte may have a composition represented by formula (A1): Li_{6-3d}Y_{d}X₆. In the formula (A1), X is one or more elements selected from the group consisting of Cl, Br, and I. d may satisfy 0 < d < 2, or may be d = 1. The halide solid electrolyte may have a composition represented by formula (A2): Li_{3-3δ}Y_{1+δ}Cl₆. In the formula (A2), δ may be 0 < δ ≤ 0.15. The halide solid electrolyte may have a composition represented by formula (A3): Li_{3-3δ}Y_{1+δ}Br₆. In the formula (A3), δ may be 0 < δ ≤ 0.25. The halide solid electrolyte may have a composition represented by formula (A4): Li_{3-3δ+a}Y_{1+δ-a}MeₐCl_{6-x-y}BrₓI_{y}. In the formula (A4), Me may be at least one selected from the group consisting of Mg, Ca, Sr, Ba, and Zn. In the formula (A4), for example, -1 < δ < 2, 0 < a < 3, 0 < (3 - 3δ + a), 0 < (1 + δ - a), 0 ≤ x ≤ 6,0 ≤ y ≤ 6, and (x + y) ≤ 6 are satisfied. The halide solid electrolyte may have a composition represented by formula (A5): Li_{3-3δ}Y_{1+δ-a}MeₐCl_{6-x-y}BrₓI_{y}. In the formula (A5), Me may be at least one selected from the group consisting of Al, Sc, Ga, and Bi. In the formula (A5), the variables may satisfy -1 < δ < 1, 0 < a < 2, 0 < (1 + δ - a), 0 ≤ x ≤ 6, 0 ≤ y ≤ 6, and (x + y) ≤ 6. The halide solid electrolyte may have a composition represented by formula (A6): Li_{3-3δ-a}Y_{1+δ-a}MeₐCl_{6-x-y}BrₓI_{y}. In the formula (A6), Me may be at least one selected from the group consisting of Zr, Hf, and Ti. In the formula (A6), the variables may satisfy -1 < δ < 1, 0 < a < 1.5, 0 < (3 - 3δ - a), 0 < (1 + δ - a), 0 ≤ x ≤ 6, 0 ≤ y ≤ 6, and (x + y) ≤ 6. The halide solid electrolyte may have a composition represented by formula (A7): Li_{3-3δ-2a}Y_{1+δ-a}MeₐCl_{6-x-y}BrₓI_{y}. In the formula (A7), Me may be at least one selected from the group consisting of Ta and Nb. In the formula (A7), the variables may satisfy -1 < δ < 1, 0 < a < 1.2, 0 < (3 - 3δ - 2a), 0 < (1 + δ - a), 0 ≤ x ≤ 6, 0 ≤ y ≤ 6, and (x + y) ≤ 6.

The solid electrolyte having ion-binding properties may be a complex hydride solid electrolyte. The complex hydride solid electrolyte can be composed of Li ions and complex ions comprising H. The complex ion comprising H, for example, may comprise an element M comprising at least one of nonmetal elements, semimetal elements, and metal elements and H bonded to the element M. In the complex ion comprising H, an element M as a central element and H surrounding the element M may be bonded to each other via a covalent bond. The complex ion comprising H may be represented by (MₘHₙ)^{α-}. In this case, m can be any positive number, and n and α can take on any positive number depending on m and the valence of the element M. The element M needs only to be any nonmetal element or metal element that can form a complex ion. For example, the element M may comprise at least one of B, C, and N as a nonmetal element, or may comprise B. Further, for example, the element M may comprise at least one of Al, Ni, and Fe as a metal element. Particularly, when the complex ion comprises B or comprises C and B, higher ion-conducting properties are easily ensured. Specific examples of the complex ion comprising H include (CB₉H₁₀)⁻, (CB₁₁H₁₂)⁻, (B₁₀H₁₀)²⁻, (B₁₂H₁₂)²⁻, (BH₄)⁻, (NH₂)⁻, (AlH₄)⁻, and combinations thereof. Particularly, when (CB₉H₁₀)⁻, (CB₁₁H₁₂)⁻, or a combination thereof is used, higher ion-conducting properties are easily ensured. Specifically, the complex hydride solid electrolyte may comprise Li, C, B, and H.

The positive electrode active material layer 10 may or may not comprise a liquid electrolyte (electrolytic solution). The electrolytic solution is a liquid comprising lithium ions as carrier ions. The electrolytic solution may be a water-based electrolytic solution or a non-water-based electrolytic solution. The composition of the electrolytic solution needs only to be the same as any known electrolytic solution. The electrolytic solution may be water or a non-water-based solvent dissolving a lithium salt. Examples of the non-water-based solvent include various carbonate-based solvents. Examples of the lithium salt include lithium amide and LiPF₆.

### 1.3.1.3 Conductive aid

Examples of the conductive aid that can be contained in the positive electrode active material layer 10 include carbon materials such as vapor-grown carbon fiber (VGCF), acetylene black (AB), ketjen black (KB), carbon nanotube (CNT), and carbon nanofiber (CNF); and metal materials such as nickel, titanium, aluminum, and stainless steel. The conductive aid, for example, may be particulate or fibrous, and the size thereof is not particularly limited. The conductive aid may be of one type used alone, or may be of two or more types used in combination.

### 1.3.1.4 Binder

Examples of the binder that can be contained in the positive electrode active material layer 10 include butadiene rubber (BR)-based binders, butylene rubber (IIR)-based binders, acrylate-butadiene rubber (ABR)-based binders, styrene-butadiene rubber (SBR)-based binders, polyvinylidene fluoride (PVdF)-based binders, polytetrafluoroethylene (PTFE)-based binders, and polyimide (PI)-based binders. The binder may be of one type used alone, or may be of two or more types used in combination.

### 1.3.1.5 Others

The positive electrode active material layer 10 may comprise various additives, in addition to the above components, for example, a dispersant or a lubricant.

### 1.3.2 Electrolyte layer

The electrolyte layer 20 is arranged between the positive electrode active material layer 10 and the negative electrode active material layer 30. The electrolyte layer 20 can comprise at least one of a solid electrolyte and an electrolytic solution or both. The electrolyte layer 20 may further optionally comprise a binder. The contents of the electrolyte and the binder in the electrolyte layer 20 are not particularly limited. Alternatively, the electrolyte layer 20 may comprise a separator for retaining an electrolyte and preventing contact between the positive electrode active material layer 10 and the negative electrode active material layer 30. The thickness of the electrolyte layer 20 is not particularly limited, and for example, may be 0.1 µm or more or 1 µm or more, and may be 2 mm or more or 1 mm or less.

The electrolyte layer 20 may consist of one layer, or may consist of a plurality of layers. For example, the electrolyte layer 20 may be provided with a first layer arranged on the positive electrode active material layer 10 side and a second layer arranged on the negative electrode active material layer 30 side, wherein the first layer may comprise a first electrolyte and the second layer may comprise a second electrolyte. The first electrolyte and the second electrolyte may be of different types from each other. The first electrolyte and the second electrolyte may each be at least one selected from the above oxide solid electrolytes, sulfide solid electrolytes, and solid electrolytes having ion-binding properties. For example, the first layer may comprise a solid electrolyte having ion-binding properties, and the second layer may comprise at least one of a solid electrolyte having ion-binding properties and a sulfide solid electrolyte.

The electrolyte contained in the electrolyte layer 20 needs only to be appropriately selected from among ones (solid electrolytes and/or liquid electrolytes) exemplified as an electrolyte that can be contained in the positive electrode active material layer 10 described above. The binder that can be contained in the electrolyte layer 20 needs only to be appropriately selected from among ones exemplified as a binder that can be contained in the positive electrode active material layer 10 described above. The electrolyte and the binder may each be of one type used alone, or may be of two or more types used in combination. The separator may be any known separator. Examples thereof include those made of resins such as polyethylene (PE), polypropylene (PP), polyester, and polyamide. The separator may be of a single-layer structure, or may be of a multilayer structure. Examples of separators having a multilayer structure can include separators of a PE/PP two-layer structure and separators of a PP/PE/PP or PE/PP/PE three-layer structure. The separator may consist of a nonwoven fabric such as cellulose nonwoven fabric, resin nonwoven fabric, or glass-fiber nonwoven fabric.

### 1.3.3 Negative electrode active material layer

The negative electrode active material layer 30 comprises at least a negative electrode active material. The negative electrode active material layer 30 may optionally comprise an electrolyte, a conductive aid, a binder, and various additives. The content of each component in the negative electrode active material layer 30 needs only to be appropriately determined in accordance with the target battery performance. For example, when the entire solid content of the negative electrode active material layer 30 is 100% by mass, the content of the negative electrode active material may be 40% by mass or greater, 50% by mass or greater, 60% by mass or greater, or 70% by mass or greater, and may be 100% by mass or less, less than 100% by mass, 95% by mass or less, or 90% by mass or less. Alternatively, when the entire negative electrode active material layer 30 is 100% by volume, the negative electrode active material and optionally the electrolyte, conductive aid, and binder in total may be contained at 85% by volume or greater, 90% by volume or greater, or 95% by volume or greater, and the remaining portion may be voids or additional components. The shape of the negative electrode active material layer 30 is not particularly limited, and for example, may be a sheet having a substantially flat surface. The thickness of the negative electrode active material layer 30 is not particularly limited, and for example, may be 0.1 µm or more, 1 µm or more, 10 µm or more, or 30 µm or more, and may be 2 mm or less, 1 mm or less, 500 µm or less, or 100 µm or less.

Any known negative electrode active material for batteries can be adopted as the negative electrode active material. Of known active materials, various materials having a low electric potential (charge-discharge potential) for storing and releasing lithium ions compared to the above positive electrode active material can be adopted. For example, silicon-based active materials such as Si, Si alloys, and silicon oxides; carbon-based active materials such as graphite and hard carbon; various oxide-based active materials such as lithium titanate; and metallic lithium and lithium alloys can be adopted. Of these, when the negative electrode active material layer 30 comprises Si as a negative electrode active material, performance of the solid battery 100 is easily enhanced. The negative electrode active material may be of one type used alone, or may be of two or more types used in combination. The shape of the negative electrode active material needs only to be any general shapes of negative electrode active materials of batteries. For example, the negative electrode active material may be particulate. The negative electrode active material particles may be primary particles, or may be secondary particles of a plurality of agglomerated primary particles. The average particle diameter (D50) of the negative electrode active material particles, for example, may be 1 nm or more, 5 nm or more, or 10 nm or more, and may be 500 µm or less, 100 µm or less, 50 µm or less, or 30 µm or less. Alternatively, the negative electrode active material may be sheet-like (foil-like or membranous), such as a lithium foil. Specifically, the negative electrode active material layer 30 may consist of a sheet of negative electrode active material.

The electrolyte that can be contained in the negative electrode active material layer 30, for example, includes the solid electrolytes and electrolytic solutions described above, and combinations thereof. The conductive aid that can be contained in the negative electrode active material layer 30, for example, needs only to be appropriately selected from among ones exemplified as a conductive aid that can be contained in the positive electrode active material layer described above. The binder that can be contained in the negative electrode active material layer 30, for example, needs only to be appropriately selected from among one exemplified as a binder that can be contained in the positive electrode active material layer described above. The electrolyte, the conductive aid, and the binder may each be of one type used alone, or may be of two or more types used in combination.

### 1.3.4 Positive electrode current collector

As shown in FIG. 3, the solid battery 100 may be provided with a positive electrode current collector 40 in contact with the positive electrode active material layer 10. Any general positive electrode current collector for batteries can be adopted as the positive electrode current collector 40. The positive electrode current collector 40 may have at least one shape selected from foil-like, tabular, mesh-like, punched metal-like, and a foam. The positive electrode current collector 40 may be composed of a metal foil or a metal mesh. Particularly, a metal foil has excellent handleability. The positive electrode current collector 40 may consist of a plurality of foils. Examples of metals constituting the positive electrode current collector 40 include at least one selected from Cu, Ni, Cr, Au, Pt, Ag, Al, Fe, Ti, Zn, Co, V, Mg, Pg, Ge, In, Sn, Zr, and stainless steel. Particularly, from the viewpoint of ensuring oxidation resistance, the positive electrode current collector 40 may comprise Al. The positive electrode current collector 40 may have on the surface thereof some coating layer for the purpose of adjusting resistance. For example, the positive electrode current collector 40 may have a carbon coating layer. The positive electrode current collector 40 may be a metal foil or substrate plated or vapor-deposited with a metal described above. When the positive electrode current collector 40 consists of a plurality of metal foils, there may be some layer between the plurality of metal foils. The thickness of the positive electrode current collector 40 is not particularly limited, and for example, may be 0.1 µm or more or 1 µm or more, and may be 1 mm or less or 100 µm or less.

### 1.3.5 Negative electrode current collector

As shown in FIG. 3, the solid battery 100 may be provided with a negative electrode current collector 50 in contact with the negative electrode active material layer 30. Any general negative electrode current collector for batteries can be adopted as the negative electrode current collector 50. The negative electrode current collector 50 may be foil-like, tabular, mesh-like, punched metal-like, or a foam. The negative electrode current collector 50 may be a metal foil or a metal mesh, and alternatively, may be a carbon sheet. Particularly, a metal foil has excellent handleability. The negative electrode current collector 50 may consist of a plurality of foils or sheets. Metals constituting the negative electrode current collector 50 include at least one selected from Cu, Ni, Cr, Au, Pt, Ag, Al, Fe, Ti, Zn, Co, V, Mg, Pb, Ge, In, Sn, Zr, and stainless steel. Particularly, from the viewpoint of ensuring reduction resistance and the viewpoint of making alloying with lithium difficult, the negative electrode current collector 50 may comprise at least one metal selected from Cu, Ni, and stainless steel. The negative electrode current collector 50 may have on the surface thereof some coating layer for the purpose of adjusting resistance. For example, the negative electrode current collector 50 may have a carbon coating layer. The negative electrode current collector 50 may be an aluminum foil having a carbon coating layer. The negative electrode current collector 50 may be a metal foil or a substrate plated or vapor-deposited with a metal described above. When the negative electrode current collector 50 consists of a plurality of metal foils, there may be some layer between the plurality of metal foils. The thickness of the negative electrode current collector 50 is not particularly limited, and for example, may be 0.1 µm or more or 1 µm or more, and may be 1 mm or less or 100 µm or less.

### 1.3.6 Additional configurations

The solid battery 100, in addition to the above configuration, may be provided with any general configuration as a battery, for example, tabs or terminals. The above configurations of the solid battery 100 may each be housed inside an outer packaging. Any known outer packaging can be adopted as the outer packaging of the battery. In addition, a plurality of solid batteries 100 may be optionally connected electrically and optionally stacked to form a battery pack. In this case, the battery pack may be housed inside a known battery case. Examples of shapes of the solid battery 100 can include coin-type, laminate-type, cylindrical, and rectangular.

The solid battery 100 can be manufactured by applying any known method, except that the above specific positive electrode active material is used, and for example, can be manufactured as follows. However, the manufacturing method for the solid battery 100 is not limited to the following method. For example, each layer may be formed by dry molding.
(1) A positive electrode active material constituting a positive electrode active material layer is dispersed in a solvent to obtain a positive electrode layer slurry. The solvent used in this case is not particularly limited, and water and various organic solvents can be used. The positive electrode layer slurry is then applied on a surface of a positive electrode current collector using a doctor blade, followed by drying, whereby a positive electrode active material layer is formed on the surface of the positive electrode current collector to obtain a positive electrode.
(2) A negative electrode active material constituting a negative electrode active material layer is dispersed in a solvent to obtain a negative electrode layer slurry. The solvent used in this case is not particularly limited, and water and various organic solvents can be used. The negative electrode layer slurry is then applied on a surface of a negative electrode current collector using a doctor blade, followed by drying, whereby a negative electrode active material layer is formed on the surface of the negative electrode current collector to obtain a negative electrode.
(3) Layers are laminated so that an electrolyte layer (solid electrolyte layer or separator) is interposed between the negative electrode and the positive electrode to obtain a laminated body comprising a negative electrode current collector, a negative electrode active material layer, an electrolyte layer, a positive electrode active material layer, and a positive electrode current collector in this order. Additional members such as terminals are attached to the laminated body as needed.
(4) The laminated body is housed in a battery case, and the laminated body is sealed with an optional electrolytic solution in the battery case, whereby a solid battery is obtained.

### 2. Second aspect

The positive electrode active material according to the second aspect is used in liquid-based batteries.

### 2.1 Manufacturing method for positive electrode active material used in liquid-based batteries

As shown in FIG. 1B, the manufacturing method for a positive electrode active material used in liquid-based batteries comprises
S1: obtaining Na-containing oxide particles having a P2-type structure, and
S2: subjecting at least a portion of Na in the Na-containing oxide particles to ion exchange with Li to obtain Li-containing oxide particles having an O2-type structure.
The Na-containing oxide particles are spherical particles having an average particle diameter of 3.5 µm or more. As shown in FIG. 2B, the Li-containing oxide particles are spherical particles having a hollow multilayer structure.

### 2.1.1 S1

In S1, Na-containing oxide particles having a P2-type structure are obtained. The Na-containing oxide particles obtained by S1 are spherical particles having an average particle diameter of 3.5 µm or more. Except that the average particle diameter of the Na-containing oxide particles is different, the S1 of the second aspect is the same as the S1 of the first aspect. Specifically, the S1 of the second aspect may comprise the above S1-1, S1-2, and S1-3. By using precursor particles having an average particle diameter of 3.5 µm or more and being spherical, Na-containing oxide particles having an average particle diameter of 3.5 µm or more and having a spherical shape are obtained. Alternatively, after spherical Na-containing oxide particle are manufactured using precursor particles having random sizes, airflow classification or sieving may be carried out, and spherical Na-containing oxide particles having an average particle diameter of 3.5 µm or more may be collected.

As described above, the Na-containing oxide particles obtained by S1 of the second aspect, excluding the difference in average particle diameter, may be the same as the Na-containing oxide particles obtained by S1 of the first aspect. Specifically, the Na-containing oxide particles have at least a P2-type structure (belonging to space group P63mc) as a crystal structure. The Na-containing oxide particles may have a crystal structure other than a P2-type structure, in addition to having a P2-type structure. Examples of the crystal structure other than a P2-type structure include various crystal structures formed when Na is deintercalated from a P2-type structure. The Na-containing oxide particles may have a P2-type structure as the main phase. In addition, The Na-containing oxide particles at least comprise, as constituent elements, at least one element among Mn, Ni, and Co; Na; and O. Particularly, when the constituent elements at least include Na, Mn, at least one of Ni and Co, and O, especially when the constituent elements include at least Na, Mn, Ni, Co, and O, performance of the positive electrode active material obtained via S2 described below is likely higher. The Na-containing oxide particles may have a chemical composition represented by Na_{c}Mnₓ₋ₚNi_{y-q}Co_{z-r}M_{p+q+r}O₂, where 0 < c ≤ 1.00, x + y + z = 1, and 0 ≤ p + q + r < 0.17. In addition, M is at least one element selected from B, Mg, Al, K, Ca, Ti, V, Cr, Fe, Cu, Zn, Ga, Ge, Sr, Y, Zr, Nb, Mo, and W. When the Na-containing oxide particles have such a chemical composition, a P2-type structure is more easily maintained. In the above chemical composition, c may be greater than 0, 0.10 or greater, 0.20 or greater, 0.30 or greater, 0.40 or greater, 0.50 or greater, or 0.60 or greater, and may be 1.00 or less, 0.90 or less, 0.80 or less, or 0.70 or less. x is 0 or greater and may be 0.10 or greater, 0.20 or greater, 0.30 or greater, 0.40 or greater, or 0.50 or greater, and is 1.00 or less and may be 0.90 or less, 0.80 or less, 0.70 or less, 0.60 or less, or 0.50 or less. y is 0 or greater and may be 0.10 or greater, or 0.20 or greater, and is 1.00 or less and may be 0.90 or less, 0.80 or less, 0.70 or less, 0.60 or less, 0.50 or less, 0.40 or less, 0.30 or less, or 0.20 or less. z is 0 or greater and may be 0.10 or greater, 0.20 or greater, or 0.30 or greater, and is 1.00 or less and may be 0.90 or less, 0.80 or less, 0.70 or less, 0.60 or less, 0.50 or less, 0.40 or less, or 0.30 or less. The element M has a small contribution towards charging and discharging. In this regard, in the above chemical composition, by having p + q + r less than 0.17, high charging and discharging capacities are easily ensured. p + q + r may be 0.16 or less, 0.15 or less, 0.14 or less, 0.13 or less, 0.12 or less, 0.11 or less, or 0.10 or less. By including the element M, P2-type and O2-type structures are easily stabilized. In the above chemical composition, p + q + r is 0 or greater, and may be 0.01 or greater, 0.02 or greater, 0.03 or greater, 0.04 or greater, 0.05 or greater, 0.06 or greater, 0.07 or greater, 0.08 or greater, 0.09 or greater, or 0.10 or greater. The composition of O is approximately 2, but may be variable without being limited to exactly 2.0.

The average particle diameter of the Na-containing oxide particles is 3.5 µm or more. The average particle diameter may be 3.5 µm or more and 20.0 µm or less, 3.5 µm or more and 10.0 µm or less, and 3.5 µm or more and 5.0 µm or less. By having the average particle diameter of 3.5 µm or more for the Na-containing oxide particles, Li-containing oxide particles obtained via S2 described below have a hollow multilayer structure.

### 2.1.2 S2

In S2, at least a portion of Na in the Na-containing oxide particles obtained by S1 is subjected to ion exchange with Li to obtain Li-containing oxide particles having an O2-type structure. The Li-containing oxide particles obtained by S2 are spherical particles having a hollow multilayer structure. Except that the average particle diameter of the Na-containing oxide particles is different, the S2 of the second aspect is the same as the S2 of the first aspect.

As described above, in S2, by subjecting at least a portion of Na in the spherical Na-containing oxide particles to ion exchange with Li, voids are generated inside the particles due to contraction during ion exchange. As described above, when the size of the Na-containing oxide particles is large, it is considered that the contraction causes cracks in the peripheral direction inside the particles, and as a result, a large number of "shells" are formed and a hollow multilayer structure is obtained.

According to the above method, Li-containing oxide particles having an O2-type structure, having a hollow multilayer structure, being spherical, and having an average particle diameter of 3.5 µm or more are obtained. The Li-containing oxide particles are used as a positive electrode active material of a liquid-based battery.

### 2.2 Positive electrode active material used in liquid-based batteries

The positive electrode active material used in liquid-based batteries according to the second aspect comprises Li-containing oxide particles. The Li-containing oxide particles have an O2-type structure. As shown in FIG. 2B, the Li-containing oxide particles are spherical particles having a hollow multilayer structure. Further, the Li-containing oxide particles have an average particle diameter of 3.5 µm or more.

### 2.2.1 Crystal structure, crystallite, and chemical composition

The crystal structure, crystallite, and chemical composition of the Li-containing oxide particles according to the second aspect may be the same as those of the first aspect above. Specifically, the Li-containing oxide particles according to the second aspect have an O2-type structure, and may have another crystal structure in addition to the O2-type structure. The Li-containing oxide particles according to the second aspect may be polycrystals each comprising a plurality of crystallites. The Li-containing oxide particles according to the second aspect, for example, at least comprise, as constituent elements, at least one element among Mn, Ni, and Co; Li; and O. In the Li-containing oxide particles, particularly when at least Li, Mn, one or both of Ni and Co, and O are included as constituent elements, especially when at least Li, Mn, Ni, Co, and O are included as constituent elements, higher performance is easily obtained. The Li-containing oxide particles may have a chemical composition represented by LiₐNa_{b}Mnₓ₋ₚNi_{y-q}Co_{z-r}M_{p+q+r}O₂ (where 0 < a ≤ 1.00; 0 ≤ b ≤ 0.20; x + y + z = 1; and 0 ≤ p + q + r< 0.17, and the element M is at least one selected from B, Mg, Al, K, Ca, Ti, V, Cr, Fe, Cu, Zn, Ga, Ge, Sr, Y, Zr, Nb, Mo, and W). When the Li-containing oxide particles have such a chemical composition, an O2-type structure is easily maintained. In the chemical composition above, a is greater than 0 and may be 0.10 or greater, 0.20 or greater, 0.30 or greater, 0.40 or greater, 0.50 or greater, or 0.60 or greater, and is 1.00 or less and may be 0.90 or less, 0.80 or less, or 0.70 or less. In the chemical composition above, b may be 0 or greater, 0.01 or greater, 0.02 or greater, or 0.03 or greater, and may be 0.20 or less, 0.15 or less, or 0.10 or less. In addition, x is 0 or greater and may be 0.10 or greater, 0.20 or greater, 0.30 or greater, 0.40 or greater, or 0.50 or greater, and is 1.00 or less and may be 0.90 or less, 0.80 or less, 0.70 or less, 0.60 or less, or 0.50 or less. Further, y is 0 or greater and may be 0.10 or greater, or 0.20 or greater, and is 1.00 or less and may be 0.90 or less, 0.80 or less, 0.70 or less, 0.60 or less, 0.50 or less, 0.40 or less, 0.30 or less, or 0.20 or less. Moreover, z is 0 or greater and may be 0.10 or greater, 0.20 or greater, or 0.30 or greater, and is 1.00 or less and may be 0.90 or less, 0.80 or less, 0.70 or less, 0.60 or less, 0.50 or less, 0.40 or less, or 0.30 or less. The element M has a small contribution towards charging and discharging. In this regard, in the above chemical composition, by having p + q + r less than 0.17, high charging and discharging capacities are easily ensured. p + q + r may be 0.16 or less, 0.15 or less, 0.14 or less, 0.13 or less, 0.12 or less, 0.11 or less, or 0.10 or less. By including the element M, an O2-type structure is easily stabilized. In the above chemical composition, p + q + r is 0 or greater, and may be 0.01 or greater, 0.02 or greater, 0.03 or greater, 0.04 or greater, 0.05 or greater, 0.06 or greater, 0.07 or greater, 0.08 or greater, 0.09 or greater, or 0.10 or greater. The composition of O is approximately 2, but may be variable without being limited to exactly 2.0.

### 2.2.2 Hollow multilayer structure

The Li-containing oxide particles according to the second aspect have a hollow multilayer structure. As shown in FIG. 2B, "hollow multilayer structure" means a structure having an outer shell 1a and having at least one inner shell 1b or solid portion 1c in the cross-sectional shape of a particle. As shown in FIG. 2C, a void may be formed without the presence of the solid portion 1c. The Li-containing oxide particles according to the second aspect may have multiple shells 1a and 1b, and alternatively may have an outer shell 1a and a solid portion 1c. In this case, a void can be present between at least one shell and an additional shell or between the shell and the solid portion. When the Li-containing oxide particles have multiple shells 1a and 1b, since the outside and inside of each shell can be in contact with a liquid, the contact area between the Li-containing oxide particles and the liquid is easily increased. For example, when an electrolytic solution is spread throughout the insides of the Li-containing oxide particles, the contact area between the particles and the electrolytic solution is easily increased. Note that "having multiple shells" means that an additional shell is further present on the inside of one shell. The one shell and the additional shell may be in partial contact, and may be partially joined. However, even when there is a void along the peripheral direction between one shell and an additional shell inside thereof, if 50% or greater of the inner periphery of the one shell is connected to the outer periphery of the additional shell inside thereof, the one shell and the additional shell are not regarded as separate shells (multilayer), but are regarded as a single shell (single-layer) composed of the one shell and the additional shell.

In the Li-containing oxide particles according to the second aspect, the surface of the outer shell 1a, for example, can be composed of a plurality of crystallites. In a Li-containing oxide particle, the outer shell 1a may be configured so that a plurality of crystallites are connected along the outer periphery of the particle. The size of the crystallites constituting the outer shell 1a may be large or small. However, the smaller the size of the crystallites, the more grain boundaries there are on a particle surface, and the more easily the advantageous effects described above are exhibited. The crystallites constituting the outer shell 1a may each have a first surface exposed on the particle surface, and the first surface may be planar. The size of the crystallites is as described above. The outer shape (outer peripheral shape) of the outer shell 1a is spherical, as described above. The inner shape (inner peripheral shape) of the outer shell 1a is not particularly limited, and may be a shape that corresponds to the outer shape. However, it is not necessary for the outer shape and inner shape of the outer shell 1a to be parallel to each other. The outer shape and inner shape of the outer shell 1a may both have unevenness. In addition, the outer shell 1a may have voids and gaps. Specifically, the crystallites constituting the outer shell 1a may have defects such as voids and gaps. Further, the outer shell 1a can have a thickness. The thickness of the outer shell 1a, for example, may be 5% or greater and 40% or less, or 5% or greater and 30% or less of the diameter (equivalent circle diameter of cross-sectional shape) of the Li-containing oxide particles. The size of voids present on the inside of the outer shell 1a (porosity) is not particularly limited. The outer shape (outer peripheral shape) of the inner shell 1n may be a shape that corresponds to the inner peripheral shape of the outer shell 1a, or may be a shape different from the inner peripheral shape of the outer shell 1a. The inner shape (inner peripheral shape) of the inner shell 1b is not particularly limited, and may be a shape that corresponds to the outer shape. The outer shape and inner shape of the inner shell 1b are not required to be parallel to each other. The outer shape and inner shape of the inner shell 1b may both have unevenness. In addition, the inner shell 1b may have voids and gaps. Specifically, the crystallites constituting the inner shell 1b may have defects such as voids and gaps. Further, the inner shell 1b can have a thickness. The thickness of the inner shell 1b, for example, may be 5% or greater and 40% or less, or 5% or greater and 30% or less of the diameter (equivalent circle diameter of cross-sectional shape) of the Li-containing oxide particles. The shape and size of the void existing between the outer shell 1a and the inner shell 1b and the shape and size of the solid portion 1c or void existing on the inside of the inner shell 1b are not particularly limited. The porosity of the particles as a whole is not particularly limited.

As shown in FIG. 2B, in the Li-containing oxide particles according to the second aspect, voids are present along the inner wall of the outer shell 1a in a cross-sectional structure. The voids may be continuous over the entire periphery of the inner wall of the outer shell 1a, or may be continuous or discontinuous along a portion of the inner wall of the outer shell 1a. For example, the voids can exist over 50% or greater of the entire periphery on the inside of the outer shell 1a. The size of the voids is not particularly limited. As described above, since the shell can have liquid permeability, a liquid that permeates from the outside of a particle via the shell to the inside of the particle can fill the voids present along the inner wall of the shell and come into contact with the inner wall of the shell. Specifically, when voids are present along the inner wall of the shell, the contact area between the particle and the liquid is more easily increased than when no voids are present. For example, when an electrolytic solution spreads inside a Li-containing oxide particle, the contact area between the particle and the electrolytic solution is easily increased.

As shown in FIG. 2B, the Li-containing oxide particles according to the second aspect can also be said to have a core-shell structure. Specifically, the Li-containing oxide particles according to one embodiment can have a shell (outer shell) and a core (inner shell or solid portion, and void) arranged inside the shell.

### 2.2.3 Spherical particles

As shown in FIG. 2B, the Li-containing oxide particles according to the second aspect are spherical particles. As described above, spherical Li-containing oxide particles have an advantage in suppressing the growth of crystallites more easily and forming smaller crystallites more easily, compared to non-spherical Li-containing oxide particles. Specifically, when Li-containing oxide particles are spherical, reaction resistance is lowered by the decrease in crystallite size, and internal diffusion resistance is easily lowered. Further, it is considered that the degree of curvature is decreased by the spheroidization, and the lithium-ion conduction resistance within the layer is lowered when the Li-containing oxide particles are applied to a positive electrode active material layer. As a result, the resistance is lowered and excellent rate characteristics are easily obtained in spherical Li-containing oxide particles, compared to non-spherical Li-containing oxide particles.

### 2.2.4 Average particle diameter

The Li-containing oxide particles according to the second aspect have an average particle diameter of 3.5 µm or more. The average particle diameter of the Li-containing oxide particles may be 3.5 µm or more and 20.0 µm or less, 3.5 µm or more and 10.0 µm or less, or 3.5 µm or more and 5.0 µm or less. As described above, when the average particle diameter of the Li-containing oxide particles is 3.5 µm or more, the Li-containing oxide particles have a hollow multilayer structure and have excellent rate characteristics when applied to liquid-based batteries.

### 2.2.5 Specific surface area

The specific surface area of the Li-containing oxide particles according to the second aspect is not particularly limited. However, when use as a positive electrode active material of a liquid-based battery is assumed, it is considered that the larger the specific surface area of the Li-containing oxide particles, the more the contact interface with the electrolytic solution increases, the more easily ion conduction paths are ensured. In this regard, when the Li-containing oxide particles have a hollow multilayer structure, are spherical, and have an average particle diameter of 3.5 µm or more, the Li-containing oxide particles may have a specific surface area of 4.5 m²/g or more. The specific surface area of the Li-containing oxide particles may be 4.5 m²/g or more and 10.0 m²/g or less, 4.5 m²/g or more and 8.0 m²/g or less, or 4.5 m²/g or more and 6.5 m²/g or less.

### 2.2.6 Supplemental

The positive electrode active material according to the second aspect, in the same manner as in the first aspect, may consist only of the above Li-containing oxide particles, or may comprise the above Li-containing oxide particles and another positive electrode active material (additional positive electrode active material). From the viewpoint of further enhancing the effect of the technique of the present disclosure, the proportion of the additional positive electrode active material to the entire positive electrode active material may be a small amount. For example, when the entirety of the positive electrode active material is 100% by mass, the content of the above Li-containing oxide particles may be 50% by mass or greater and 100% by mass or less, 60% by mass or greater and 100% by mass or less, 70% by mass or greater and 100% by mass or less, 80% by mass or greater and 100% by mass or less, 90% by mass or greater and 100% by mass or less, 95% by mass or greater and 100% by mass or less, or 99% by mass or greater and 100% by mass or less.

### 2.3 Liquid-based battery

The positive electrode active material according to the second aspect is used as a positive electrode active material of a liquid-based battery. "Liquid-based battery" means a battery comprising a liquid electrolyte (electrolytic solution). The electrolyte contained in a liquid-based battery may be entirely a liquid electrolyte, or may be a combination of a liquid electrolyte and a solid electrolyte. FIG. 3 schematically shows a configuration of the liquid-based battery according to one embodiment. As shown in FIG. 3, the liquid-based battery 100 according to one embodiment comprises a positive electrode active material layer 10, an electrolyte layer 20, and a negative electrode active material layer 30. The positive electrode active material layer 10 comprises the above positive electrode active material according to the second aspect. In addition, the positive electrode active material layer 10 comprises a liquid electrolyte.

The positive electrode active material layer 10, the electrolyte layer 20, and the negative electrode active material layer 30 provided in the liquid-based battery 100, other than comprising the positive electrode active material according to the above second aspect as a positive electrode active material and a liquid electrolyte as an electrolyte, may be the same as those provided in the solid battery 100. Since the configuration of the liquid-based battery 100 is obvious, the detailed description thereof is omitted here.

### 3. Vehicle

The solid battery or liquid-based battery of the present disclosure, for example, can be suitably used in at least one type of vehicle selected from hybrid vehicle (HEV), plug-in hybrid vehicle (PHEV), and battery electric vehicle (BEV). Specifically, the technique of the present disclosure has an aspect of a vehicle having one or both of the solid battery and the liquid-based battery of the present disclosure.

### 4. Effect

As stated above, the positive electrode active material according to the first aspect has low resistance when applied to a solid battery. In addition, the positive electrode active material according to the second aspect has excellent rate characteristics when applied to a liquid-based battery.

### EXAMPLES

As stated above, one embodiment for each of a manufacturing method for a positive electrode active material, a positive electrode active material, and a battery has been described. However, it is possible to modify the technique of the present disclosure in various ways other than the above embodiments without departing from the spirit thereof. Hereinafter, the technique of the present disclosure will be further described in detail with reference to the Examples. However, the technique of the present disclosure is not limited to the following Examples.
1. Production of positive electrode active material
1.1 Positive electrode active material A
1.1.1 Production of precursor particle a1
   (1) MnSO₄·5H₂O, NiSO₄·6H₂O, and CoSO₄·7H₂O were weighed to a target compositional ratio and dissolved in distilled water to a concentration of 1.2 mol/L to obtain a first solution. In a separate container, Na₂CO₃ was dissolved in distilled water to a concentration of 1.2 mol/L to obtain a second solution.
   (2) 1000 mL of pure water was loaded into a reactor (with baffle boards), and 500 mL of the first solution and 500 mL of the second solution were each added dropwise therein at a rate of about 4 mL/min.
   (3) Upon the completion of the dropwise addition, the mixture was stirred at a stirring rate of 150 rpm at room temperature for 1 h to obtain a product.
   (4) The product was washed with pure water and subjected to solid-liquid separation with a centrifugal separator, and a precipitate was collected.
   (5) The resulting precipitate was dried overnight at 120 °C, crushed in a mortar, and then separated into coarse particles a1-1 and fine particles a1-2 by airflow classification. Both of the coarse particles a1-1 and the fine particles a1-2 were composite salts comprising Mn, Ni, and Co. The coarse particles a1-1 were spherical particles having an average particle diameter D50 of 4.0 µm. The fine particles a1-2 were spherical particles having an average particle diameter D50 of 1.8 µm.
   (6) The coarse particles a1-1 were used as precursor particles a1.

### 1.1.2 Production of composite particle a2

(1) Na₂CO₃ and distilled water were weighed to 1150 g/L and then stirred to complete dissolution using a stirrer to produce a Na₂CO₃ aqueous solution.
(2) The above Na₂CO₃ aqueous solution and the above precursor particles a1 were weighed and mixed so as to have a composition of Na_{0.7}Mn_{0.5}Ni_{0.2}Co_{0.3}O₂ after the firing described below to obtain a slurry.
(3) The above slurry was airflow-dried by spray drying to obtain composite particles a2. Specifically, using a spray drying apparatus DL410, under the conditions of a slurry feed rate of 30 mL/min, an inlet temperature of 200 °C, a circulating air volume of 0.8 m³/min, and a spraying air pressure of 0.3 MPa, the above slurry was airflow-dried and surfaces of the precursor particles a1 were coated with Na₂CO₃ to obtain composite particles a2. In the composite particles a2, 77% by area of the surfaces of the precursor particles a1 were coated with Na₂CO₃.

### 1.1.3 Firing of composite particle a2

The composite particles a2 were loaded into an alumina crucible and fired in an ambient air atmosphere to obtain Na-containing oxide particles a3 having a P2-type structure. The firing conditions were as stated in the following (1) to (7).
(1) An alumina crucible containing the above composite particle a2 was set in a heating furnace having an ambient air atmosphere.
(2) Temperature inside the heating furnace was raised from room temperature (25 °C) to 600 °C in 115 min.
(3) The inside of the heating furnace was kept at 600 °C for 360 min to carry out pre-firing.
(4) After pre-firing, temperature inside the heating furnace was raised from 600 °C to 900 °C in 100 min.
(5) The inside of the heating furnace was kept at 900 °C for 60 min to carry out main firing.
(6) After main firing, temperature inside the heating furnace was lowered from 900 °C to 250 °C in 120 min.
(7) The alumina crucible was removed from the heating furnace at 250 °C and left to cool in a dry atmosphere outside the furnace to reach 25 °C in 10 min.

The fired product after cooling was crushed using a mortar in a dry atmosphere to obtain Na-containing oxide particles a3 having a P2-type structure (P2-type particles a3). The P2-type particles a3 had an average particle diameter D50 of 3.2 µm and were spherical particles.

### 1.1.4 Ion exchange

(1) LiNO₃ and LiCl were weighed to a molar ratio of 50:50 and mixed with the above P2-type particles a3 at a molar ratio 10 times the minimum Li amount required for ion exchange to obtain a mixture.
(2) An alumina crucible was used to carry out ion exchange at 280 °C for 1 h in an ambient air atmosphere to obtain a product comprising a Li-containing oxide.
(3) The product was washed off of any salt remaining thereon with pure water and subjected to solid-liquid separation by vacuum filtration to obtain a precipitate.
(4) The resulting precipitate was dried overnight at 120 °C to obtain a positive electrode active material A.

### 1.2 Positive electrode active material B

### 1.2.1 Production of precursor particle b 1

The above fine particles a1-2 were used as precursor particles b1.

### 1.2.2 Production and firing of composite particle b2

Except that the precursor particles b1 were used in place of the precursor particles a1, composite particles b2 were produced and fired in the same manner as above to obtain Na-containing oxide particles b3 having a P2-type structure (P2-type particles b3). The P2-type particles b3 had an average particle diameter D50 of 1.8 µm and were spherical particles.

### 1.2.3 Ion exchange

Except that the P2-type particles b3 were used in place of the P2-type particles a3, ion exchange was carried out in the same manner as above to obtain a positive electrode active material B.

### 1.3 Positive electrode active material C

### 1.3.1 Production of precursor particle c1

(1) MnSO₄·5H₂O, NiSO₄·6H₂O, and CoSO₄·7H₂O were weighed to a target compositional ratio and dissolved in distilled water to a concentration of 2 mol/L to obtain a first solution. In a separate container, Na₂CO₃ was dissolved in distilled water to a concentration of 2 mol/L to obtain a second solution.
(2) 1000 mL of pure water was loaded into a reactor (with baffle boards), and 900 mL of the first solution and 900 mL of the second solution were each added dropwise therein at a rate of about 4 mL/min.
(3) Upon the completion of the dropwise addition, the mixture was stirred at a stirring rate of 150 rpm at room temperature for 1 h to obtain a product.
(4) The product was washed with pure water and subjected to solid-liquid separation with a centrifugal separator, and a precipitate was collected.
(5) The resulting precipitate was dried overnight at 120 °C, crushed in a mortar, and then separated into coarse particles c1-1 and fine particles c1-2 by airflow classification. Both of the coarse particles c1-1 and the fine particles c1-2 were composite salts comprising Mn, Ni, and Co. The coarse particles c1-1 were spherical particles having an average particle diameter D50 of 4.8 µm.
(6) The coarse particles c1-1 were used as precursor particles c1.

### 1.3.2 Production and firing of composite particle c2

Except that the precursor particles c1 were used in place of the precursor particles a1, composite particles c2 were produced and fired in the same manner as above to obtain Na-containing oxide particles c3 having a P2-type structure (P2-type particles c3). The P2-type particles c3 had an average particle diameter D50 of 4.3 µm and were spherical particles.

### 1.3.4 Ion exchange

Except that the P2-type particles c3 were used in place of the P2-type particles a3, ion exchange was carried out in the same manner as above to obtain a positive electrode active material C.

1.4 Positive electrode active material D

### 1.4.1 Production of precursor particle d1

The above fine particles a1-2 were used as precursor particles d1.

### 1.4.2 Production of composite particle d2

Na₂CO₃ and the precursor particles d1 were weighed so as to have a composition of Na_{0.7}Mn_{0.5}Ni_{0.2}Co_{0.3}O₂. The weighed precursor particles d1 and Na₂CO₃ were mixed using a mortar, whereby composite particles d2 were obtained. In the composite particles d2, 22% by area of surfaces of the precursor particles d1 were coated with Na₂CO₃.

### 1.4.3 Firing of composite particle d2

Except that the composite particles d2 were used in place of the composite particles a2, the composite particles d2 were fired in the same manner as above to obtain Na-containing oxide particles d3 having a P2-type structure (P2-type particles d3). The P2-type particles d3 had an average particle diameter D50 of 1.3 µm and were spherical particles.

### 1.4.4 Ion exchange

Except that the P2-type particles d3 were used in place of the P2-type particles a3, ion exchange was carried out in the same manner as above to obtain a positive electrode active material D.

### 2. Evaluation of positive electrode active material

### 2.1 Elemental analysis and identification of crystal structure

Elemental analysis was carried out on each of the positive electrode active materials A to D, and a target composition was obtained for each thereof. In addition, X-ray diffraction measurements were carried out, and all of the positive electrode active materials A to D had an O2-type structure.

### 2.2 Measurements of average particle diameter and specific surface area

Average particle diameter D50 and BET specific surface area were measured for each of the positive electrode active materials A to D. The average particle diameter D50 is a 50% cumulative particle diameter (median diameter) in a volume-based particle size distribution by a laser diffraction/scattering method. The BET specific surface area was measured using a gas adsorption method. Specifically, measurements were carried out using a specific surface area/fine pore distribution measuring apparatus (Micromeritics, Tristar) by a constant volume method with nitrogen as the adsorbed gas. Specifically, a glass tube loaded with a sample was immersed in liquid nitrogen, the inside of the tube was evacuated, and the relative pressure (= adsorption equilibrium pressure/saturated vapor pressure) was then changed to measure the adsorbed nitrogen amount. The BET specific surface area was determined from the measured adsorbed nitrogen amount and relative pressure.

### 2.3 Observation of shape

The exteriors and cross-sectional shapes of the positive electrode active materials A to D were observed by SEM. SEM images of the cross-sectional shapes are shown in FIG. 4. The positive electrode active material A consisted of spherical particles having a hollow single-layer structure. The positive electrode active material B consisted of spherical particles having a hollow single-layer structure. The positive electrode active material C consisted of spherical particles having a hollow multilayer structure. The positive electrode active material D consisted of tabular particles.

### 3. Production of evaluation cell

### 3.1 Production of solid battery

Each of the positive electrode active materials was used to produce a solid battery. The production procedure of the solid battery was as follows.
(1) A positive electrode active material, a sulfide solid electrolyte A (argyrodite-type sulfide solid electrolyte), PVDF, and VGCF were weighed so as to have a ratio of positive electrode active material: sulfide solid electrolyte A : PVDF : VGCF = 82.1:14.9:0.6:2.4 (mass ratio) and mixed to obtain a positive electrode mixture.
(2) A negative electrode active material (Li₁₅Si₄ and elemental Si), a sulfide solid electrolyte B (Li₂S-P₂S₅-LiI-LiBr), PVDF, and VGCF were weighed so as to have a ratio of Li₁₅S₄ : elemental Si : sulfide solid electrolyte B : PVDF : VGCF = 30.5:50.7:15.5:0.9:2.4 (mass ratio) and mixed to obtain a negative electrode mixture.
(3) The sulfide solid electrolyte B and acrylate-butadiene rubber (ABR) were weighed so as to have a ratio of sulfide solid electrolyte B : ABR = 99.4:0.6 (mass ratio) and mixed to obtain an electrolyte mixture.
(4) The above electrolyte mixture was placed in a Macor cylinder and pressed at 9.8 kN for 1 min to form an electrolyte layer. The above positive electrode mixture was then placed on one side of the electrolyte layer and pressed at 19.6 kN for 1 min to form a positive electrode active material layer. Further, the above negative electrode mixture was then placed on the other side of the electrolyte layer and pressed at 58 kN for 3 min to form a negative electrode active material layer. Finally, current collectors were arranged on both sides in the laminating direction of the above layers to obtain a solid battery.

### 3.2 Production of liquid-based battery

Each of the positive electrode active materials was used to produce a liquid-based battery. The production procedure of the liquid-based battery was as follows.
(1) A positive electrode active material, acetylene black (AB) as a conductive aid, and polyvinylidene fluoride (PVdF) as a binder were weighed so as to have a mass ratio of positive electrode active material : AB : PVdF = 85:10:5, and dispersed and mixed in N-methyl-2-pyrrolidone to obtain a positive electrode mixture slurry. The positive electrode mixture slurry was applied on an aluminum foil and vacuum-dried overnight at 120 °C to obtain a positive electrode, which was a laminate of a positive electrode active material layer and a positive electrode current collector.
(2) LiPF₆ was dissolved at a concentration of 1 M in a mixed solvent obtained by mixing trifluoropropylene carbonate (TFPC) and trifluoroethyl methyl carbonate (TFEMC) at a ratio of TFPC:TFEMC = 30 vol%:70 vol% to obtain an electrolytic solution.
(3) A metallic lithium foil was prepared as a negative electrode.
(4) The positive electrode, the electrolytic solution, and the negative electrode were used to produce a coin cell (CR2032) as a liquid-based battery.

### 4. Evaluation of cell

### 4.1 Measurement of discharging capacity of solid battery

The above solid battery was charged and discharged at a 0.1 C rate (1 C = 220 mA/g) with a voltage range of 1.8 to 4.6 V in an isothermal chamber kept at 25 °C, and the discharge capacity was measured.

### 4.2 Measurement of DCIR resistance of solid battery

Charging and discharging were repeated twice in the above solid battery at a 0.1 Crate (1 C = 220 mA/g) with a voltage range of 1.8 to 4.6 V in an isothermal chamber kept at 25 °C. A current equivalent to 3 C was applied for 10 s in a 50% SOC state to measure the DCIR resistance.

### 4.3 Liquid-based battery

Each of the coin cells was charged and discharged at a 0.1 C rate or 3 C rate (1 C = 220 mA/g) with a voltage range of 2.0 to 4.8 V in an isothermal chamber kept at 25 °C, and the capacity at 0.1 C and the capacity at 0.3 C were each measured.

### 5. Evaluation results

The evaluation results of the positive electrode active materials are shown in Tables 1 and 2 below. The evaluation results of the solid batteries are shown in Table 1 below. The evaluation results of the liquid-based batteries are shown in Table 2 below.

**(Table 1: Solid batteries)**

| Active material type | D50 (µm) | Particle shape | Specific surface area (m²/g) | Discharging capacity (mAh/g) | Resistance (Ω) | Remarks |
|---|---|---|---|---|---|---|
| A | 2.8 | spherical hollow single-layer | 3.1 | 213 | 36 | Example |
| B | 1.5 | spherical hollow single-layer | 6.6 | 222 | 46 | Example |
| C | 3.9 | spherical hollow multilayer | 4.6 | 202 | 61 | Reference Example |
| D | 0.9 | tabular | 7.6 | 226 | 63 | Comparative Example |

**(Table 2: Liquid-based batteries)**

| Active material type | D50 (µm) | Particle shape | Specific surface area (m²/g) | 0.1 C capacity (mAh/g) | 3 C capacity (mAh/g) | Capacity retention rate (%) | Remarks |
|---|---|---|---|---|---|---|---|
| A | 2.8 | spherical hollow single-layer | 3.1 | 229 | 196 | 86 | Reference Example |
| B | 1.5 | spherical hollow single-layer | 6.6 | - | - | - | Reference Example |
| C | 3.9 | spherical hollow multilayer | 4.6 | 242 | 212 | 88 | Example |
| D | 0.9 | tabular | 7.6 | - | - | - | Comparative Example |

As is clear from the results shown in Table 1, it can be said that the positive electrode active materials A and B had low resistances when applied to solid batteries. As is clear from the results in Table 2, it can be said that the positive electrode active material C had excellent rate characteristics when applied to a liquid-based battery.

### 6. Supplemental

In the above Examples, although precursor particles obtained by a coprecipitation method were exemplified, the precursor particles can be obtained by other methods. In addition, in the above Examples, although composite particles obtained by coating the surfaces of the precursor particles with a Na source by spray drying were exemplified, the composite particles can be obtained by other methods. Further, in the above Examples, although a Na-containing oxide having a P2-type structure and a Li-containing oxide having an O2-type structure having predetermined chemical compositions were exemplified, the chemical compositions of the Na-containing oxide and the Li-containing oxide are not limited thereto. Furthermore, the Na-containing oxide and the Li-containing oxide may be doped with an element M other than Mn, Ni, or Co. The element M is as described in the embodiments.

### 7. Conclusion

As stated above, the positive electrode active material comprising a Li-containing oxide, when the Li-containing oxide satisfies the following requirements (1) to (3), has low resistance when applied to a solid battery.
(1) The Li-containing oxide particles have an O2-type structure.
(2) The Li-containing oxide particles are spherical particles having a hollow single-layer structure.
(3) The Li-containing oxide particles have an average particle diameter of 1.0 µm or more and less than 3.5 µm.

The positive electrode active material comprising a Li-containing oxide, when the Li-containing oxide satisfies the following requirements (4) to (6), has excellent rate characteristics when applied to a liquid-based battery.
(4) The Li-containing oxide particles have an O2-type structure.
(5) The Li-containing oxide particles are spherical particles having a hollow multilayer structure.
(6) The Li-containing oxide particles have an average particle diameter of 3.5 µm or more.

Li-containing oxide particles satisfying the requirements (1) to (3) above and Li-containing oxide particles satisfying the requirements (4) to (6) above, for example, can be produced separately depending on the size of P2-type particles before ion exchange.

### REFERENCE SIGNS LIST

- 100: battery (solid battery, liquid-based battery)
- 10: positive electrode active material layer
- 20: electrolyte layer
- 30: negative electrode active material layer
- 40: positive electrode current collector
- 50: negative electrode current collector

## Claims

1. A manufacturing method for a positive electrode active material used in solid batteries, the method comprising:
obtaining Na-containing oxide particles having a P2-type structure, and
subjecting at least a portion of Na in the Na-containing oxide particles to ion exchange with Li to obtain Li-containing oxide particles having an O2-type structure, wherein
the Na-containing oxide particles are spherical particles having an average particle diameter of 1.0 µm or more and less than 3.5 µm, and
the Li-containing oxide particles are spherical particles having a hollow single-layer structure.

2. The manufacturing method according to claim 1, wherein
the Na-containing oxide particles comprise, as constituent elements,
at least one element among Mn, Ni, and Co;
Na; and
O.

3. A positive electrode active material used in solid batteries, comprising Li-containing oxide particles, wherein
the Li-containing oxide particles have an O2-type structure,
the Li-containing oxide particles are spherical particles having a hollow single-layer structure, and
the Li-containing oxide particles have an average particle diameter of 1.0 µm or more and less than 3.5 µm.

4. The positive electrode active material according to claim 3, wherein
the Li-containing oxide particles have a specific surface area of less than 4.5 m²/g.

5. The positive electrode active material according to claim 3 or 4, wherein
the Li-containing oxide particles comprise, as constituent elements,
at least one element among Mn, Ni, and Co;
Li; and
O.

6. A solid battery, comprising a positive electrode active material layer, an electrolyte layer, and a negative electrode active material layer, wherein
the positive electrode active material layer comprises the positive electrode active material according to any one of claims 3 to 5, and
the positive electrode active material layer comprises a solid electrolyte.

7. A manufacturing method for a positive electrode active material used in liquid-based batteries, the method comprising:
obtaining Na-containing oxide particles having a P2-type structure, and
subjecting at least one portion of Na in the Na-containing oxide particles to ion exchange with Li to obtain Li-containing oxide particles having an O2-type structure, wherein
the Na-containing oxide particles are spherical particles having an average particle diameter of 3.5 µm or more, and
the Li-containing oxide particles are spherical particles having a hollow multilayer structure.

8. The manufacturing method according to claim 7, wherein
the Na-containing oxide particles comprise, as constituent elements,
at least one element among Mn, Ni, and Co;
Na; and O.

9. A positive electrode active material used in liquid-based batteries, comprising Li-containing oxide particles, wherein
the Li-containing oxide particles have an O2-type structure,
the Li-containing oxide particles are spherical particles having a hollow multilayer structure, and
the Li-containing oxide particles have an average particle diameter of 3.5 µm or more.

10. The positive electrode active material according to claim 9, wherein
the Li-containing oxide particles have a specific surface area of 4.5 m²/g or more.

11. The positive electrode active material according to claim 9 or 10, wherein
the Li-containing oxide particles comprise, as constituent elements,
at least one element among Mn, Ni, and Co;
Li; and
O.

12. A liquid-based battery, comprising a positive electrode active material layer, an electrolyte layer, and a negative electrode active material layer, wherein
the positive electrode active material layer comprises a positive electrode active material according to any one of claims 9 to 11, and
the positive electrode active material layer comprises a liquid electrolyte.
